# EUROPÄISCHE PATENTSCHRIFT

(11) **EP 1 367 664 B1**
(45) Veröffentlichungstag und Bekanntmachung des Hinweises auf die Patenterteilung: **28.02.2007**
(21) Anmeldenummer: 03008343.0
(22) Anmeldetag: 10.04.2003
(51) Int. Cl.: H01M 8/02

(54) **Graphithaltige Bipolarplatte mit Polypropylen als Polymerbinder**
Bipolar plate comprising polypropylene as polymer binder
Plaque bipolaire ayant polypropylène comme liant polymère

(30) Priorität: 14.04.2002 DE 10216306
(43) Veröffentlichungstag der Anmeldung: 03.12.2003
(73) Patentinhaber: SGL CARBON AG, 65203 Wiesbaden (DE)
(72) Erfinder: Müller, Alwin, 97084 Würzburg (DE); Von Ganski, Albin, 86647 Buttenwiesen (DE); Hagenbach, Thomas, 4051 Basel (CH)

(56) Entgegenhaltungen:
- EP-A- 0 153 592
- EP-A- 1 160 900
- EP-A- 1 178 498
- EP-A- 1 317 009
- WO-A-00/41260
- WO-A-00/44005
- WO-A-01/80339
- WO-A-02/09220
- FR-A- 2 810 795
- JP-A- 5 104 592
- JP-A- 11 291 296
- US-A- 5 429 492
- US-A- 6 086 643
- US-A1- 2001 035 595
- US-A1- 2002 005 508
- US-B1- 6 180 275

## Beschreibung

Die Erfindung betrifft ein Verfahren zur Herstellung einer Kontaktplatte für eine elektrochemische Zelle mit einer elektrischen Leitfähigkeit senkrecht zur Plattenebene von mindestens 20 S/cm.

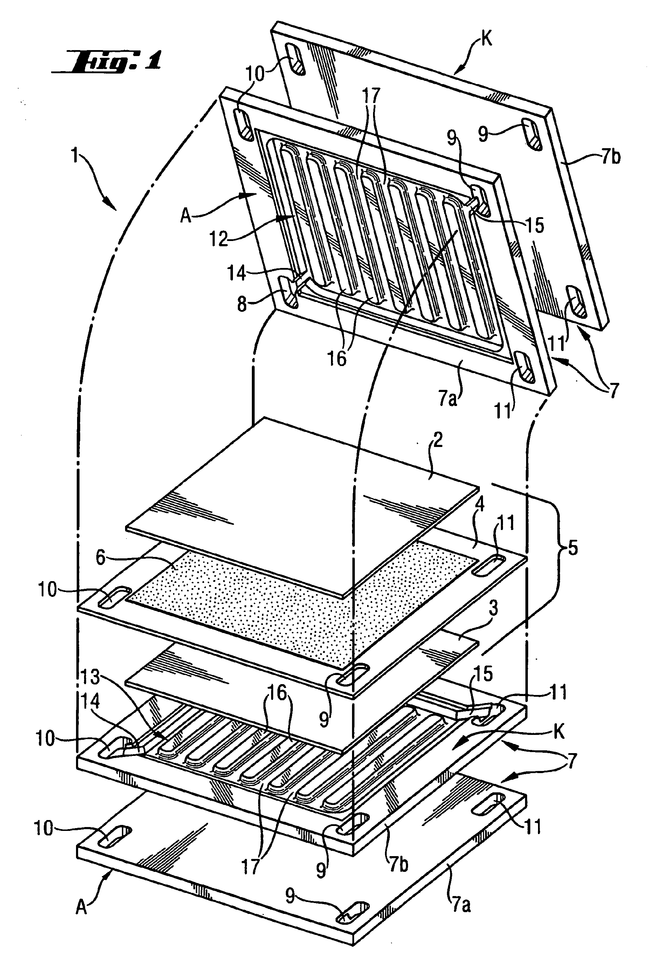

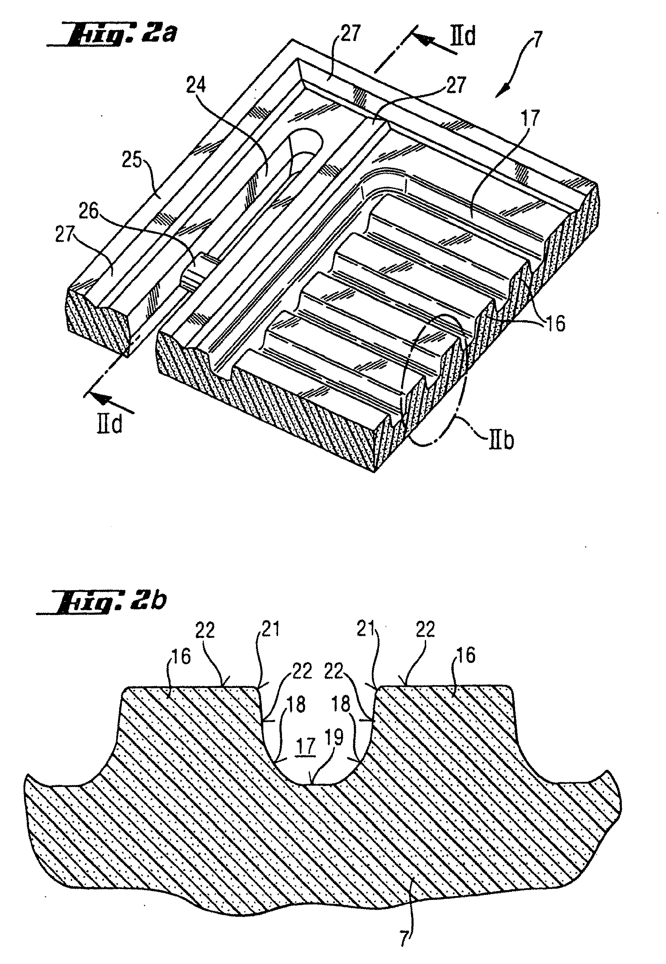

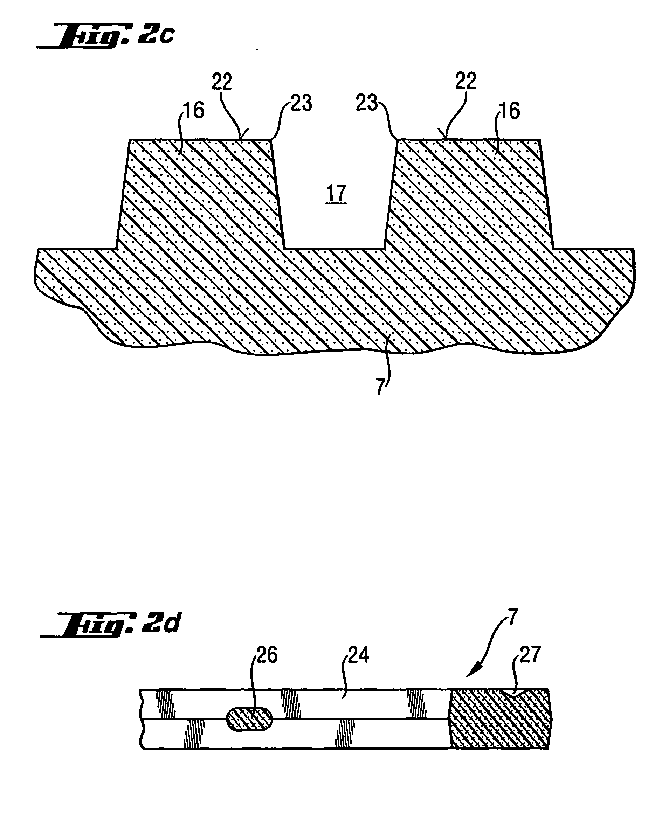

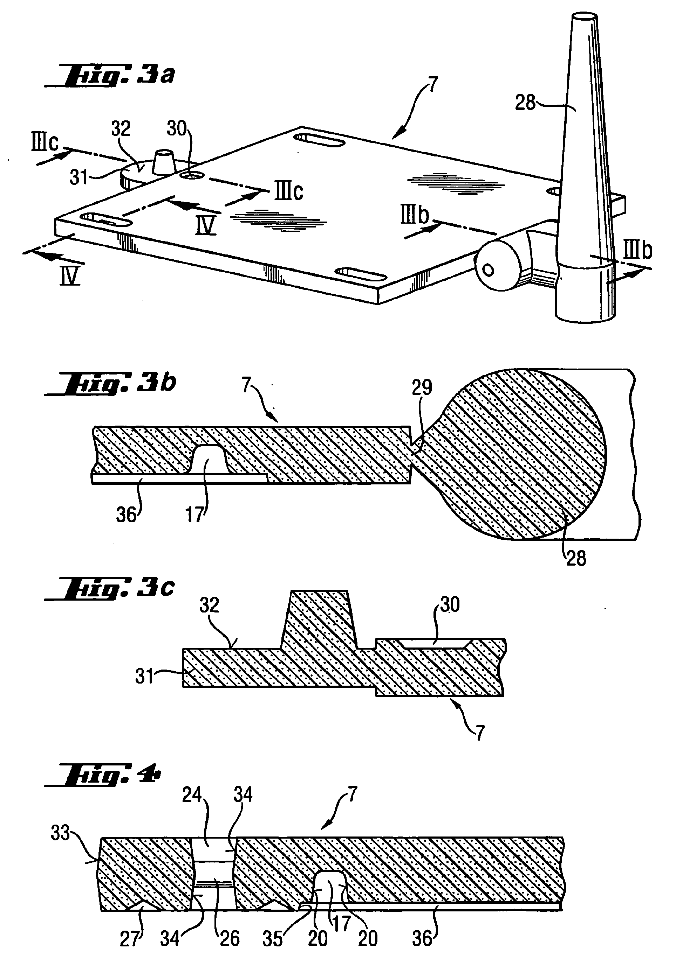

Brennstoffzellen sind Vorrichtungen zur direkten Umwandlung chemischer in elektrische Energie. Eine einzelne Brennstoffzelle 1 (siehe Figur 1) besteht aus zwei Elektroden Anode 2 und Kathode 3, die durch eine Elektrolytschicht, z.B. eine protonenleitende Polymer-Membran 4 räumlich voneinander getrennt sind. Anode 2, Kathode 3 und

Membran 4 bilden zusammen eine Membran-Elektroden-Einheit (MEA) 5. An der Anode erfolgt die elektrochemische Oxidation eines Brennstoffs, z.B. Wasserstoff oder Methanol. Die dabei freigesetzten Elektronen fließen über einen äußeren Stromkreis zur Kathode. Hier wird unter Aufnahme der Elektronen ein Oxidationsmittel, z.B. Sauerstoff, reduziert. Die Grenzflächen zwischen Elektrode und Elektrolyt werden mit Katalysatoren 6, die eine Beschleunigung der Elektrodenreaktionen bewirken, belegt.

Für praktische Anwendungen wird häufig eine Vielzahl von Brennstoffzellen in einem Zellenstapel ("stack") kombiniert, um die benötigte Leistungsangabe zu erreichen. Die auf- bzw. hintereinander gestapelten Zellen werden durch Längsverschraubungen (in Figur 1 nicht dargestellt) zusammen gehalten. Vor der ersten und nach der letzten Zelle wird der "stack" durch Endplatten abgeschlossen.

Üblicherweise sind die Zellen innerhalb eines "stacks" elektrisch in Serie, bezüglich der Medienführung jedoch parallel geschaltet. Den elektrischen Kontakt zwischen den aufeinanderfolgenden Zellen stellen Bipolarplatten (BPP) 7 her. Die Zu- und Abfuhr der Reaktionsmedien erfolgt über Transportwege, die den "stack" in Stapelrichtung durchqueren, d.h. in den aufeinander folgenden BPP 7 und MEA 5 sind fluchtende Durchbrüche für die Brennstoffzufuhr 8 und die Brennstoffabfuhr 9 sowie für die Oxidationsmittelzufuhr 10 und die Oxidationsmittelabfuhr 11 vorgesehen.

Zur Versorgung der einzelnen Elektroden mit den Reaktionsmedien sind in den Oberflächen der BPP 7 Verteilstrukturen mit Strömungswegen 17, z.B. Kanäle, eingelassen.

Die Medienverteilstruktur 12 auf der Anodenseite der BPP 7 dient zur Verteilung des Brennstoffs über die Fläche der Anode 2, die Medienverteilstruktur 13 auf der Kathodenseite zur Verteilung des Oxidationsmittels über die Fläche der Kathode 3. Die Medienverteilstrukturen 12, 13 sind über Einlässe 15 und Auslässe 14 mit den entsprechenden Medienzufuhrwegen 8, 10 und Medienabfuhrwegen 9, 11 verbunden. Hervorstehenden Elemente 16, z.B. Stege auf der BPP-Oberfläche stellen den elektronischen Kontakt zur jeweils angrenzenden Elektrode her. Die Struktur der Plattenoberfläche hat somit zwei Aufgaben zu erfüllen: Verteilung des Reaktionsmediums und elektrische Kontaktierung der angrenzenden Elektrode, und wird daher im folgenden auch als Kontakt- und Verteilstruktur bezeichnet.

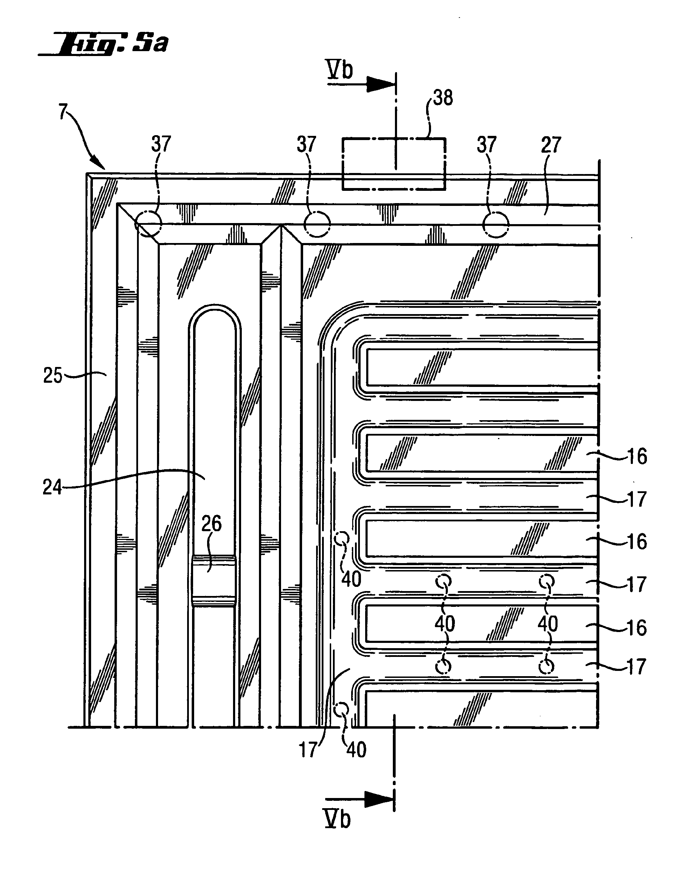

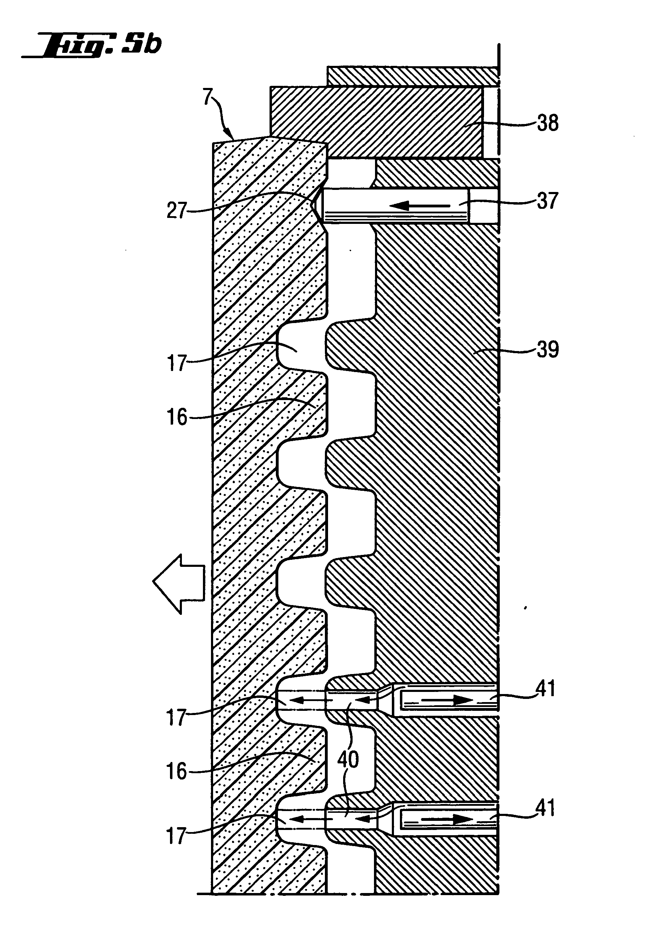

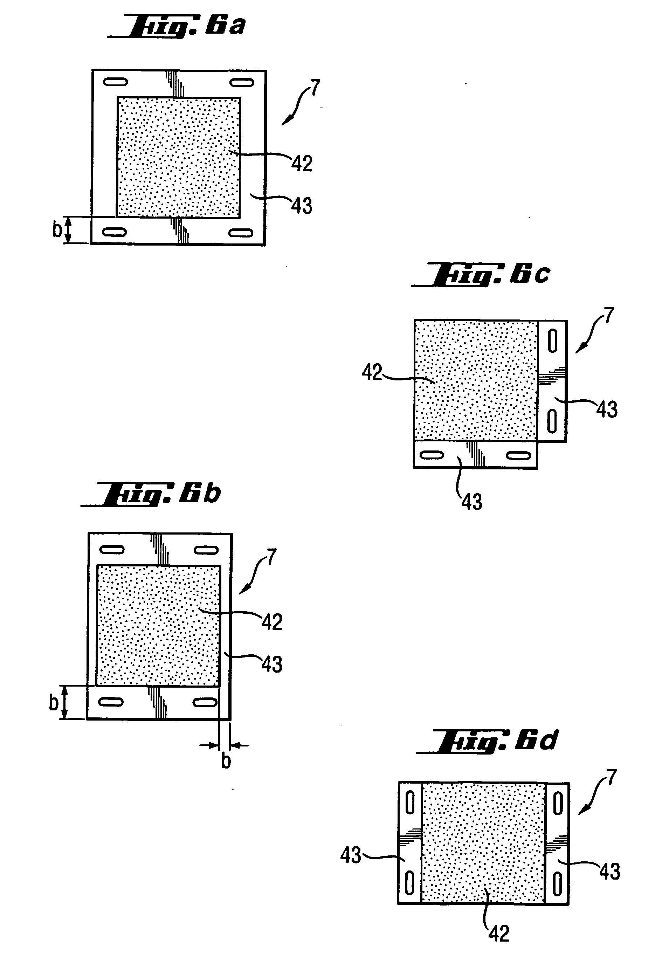

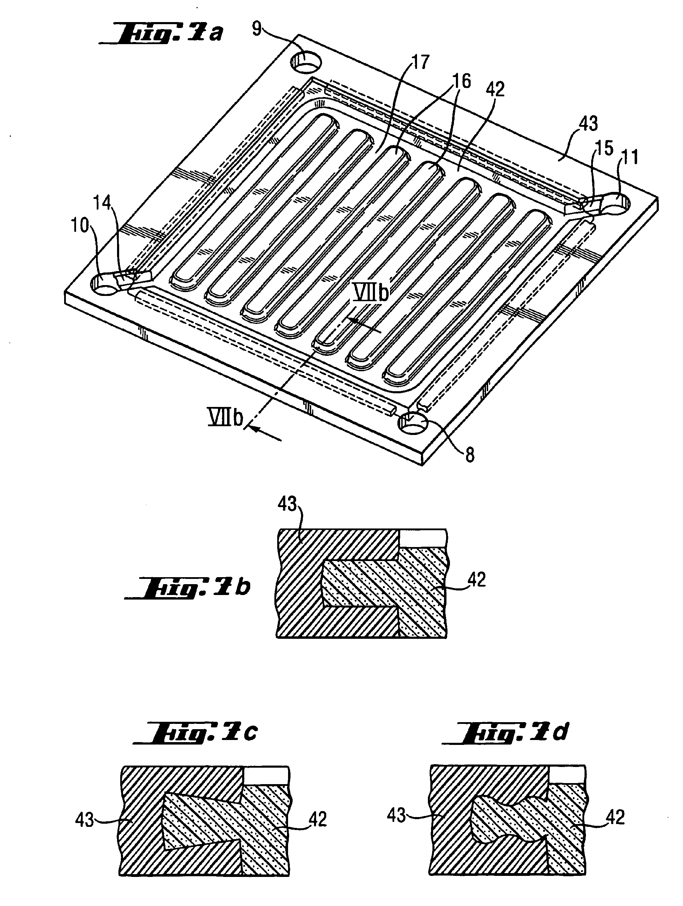

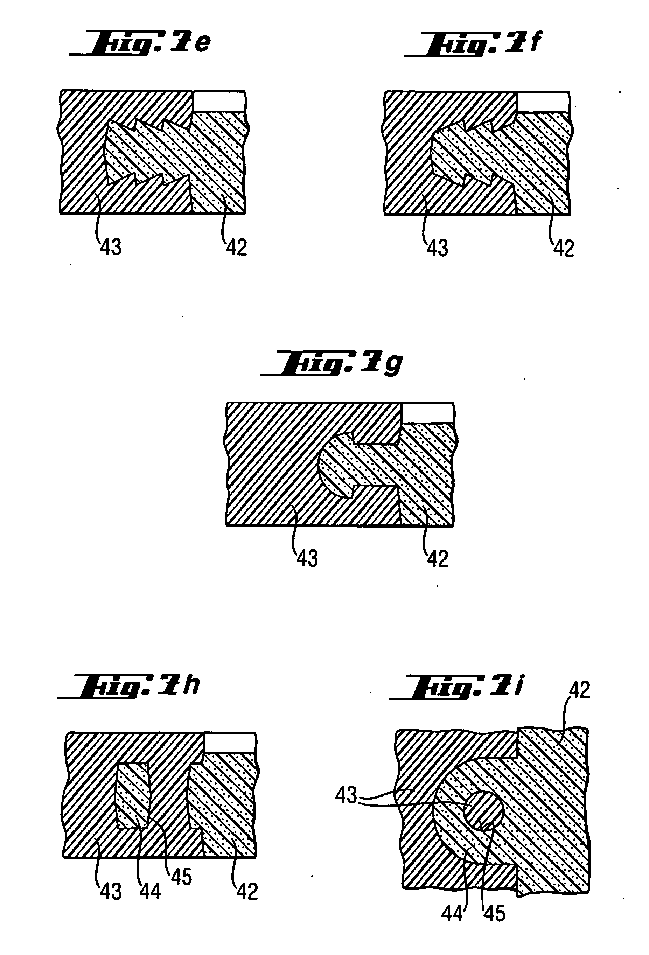

Die Vermischung der verschiedenen Reaktionsmedien muss verhindert werden. Dazu wird die Anodenseite A jeder BPP 7 gegen den Oxidationsmittelzufuhrweg 10 und den Oxidationsmittelabfuhrweg 11 und die Kathodenseite K gegen den Brennstoffzufuhrweg 8 und den Brennstoffabfuhrweg 9 abgedichtet. Für die Aufnahme der Dichtungen werden in der Plattenoberfläche Nuten ausgespart (vgl. Figuren 2a und 2d). Die BPP 7 kann als Kombination aus einer anodenseitigen Platte 7a und einer kathodenseitigen Platte 7b aufgebaut werden. Die aneinandergrenzenden Flächen der beiden Teil-Bipolarplatten 7a und 7b können eine Kühlmittelverteilstruktur umschließen (in Figur 1 nicht dargestellt). Diese Ausführung wird im folgenden als Kühlplattenverbund bezeichnet. Für die Zufuhr und

Abfuhr des Kühlmittels sind weitere den "stack" durchquerende Transportwege vorzusehen, und die Transportwege des Kühlmittels und der Reaktionsmedien müssen ebenfalls gegeneinander abgedichtet werden.

Endplatten, Bipolarplatten und Platten mit Kühlmittelversteilerstruktur (Kühlplatten) werden im folgenden unter der Bezeichnung Kontaktplatten für elektrochemische Zellen zusammengefasst.

Aus der komplexen Funktion der Kontaktplatten resultieren hohe Anforderungen an das verwendete Material: elektrische Leitfähigkeit, Undurchlässigkeit für die Reaktionsmedien (Funktion als Separator), thermische und mechanische Stabilität unter den Betriebsbedingungen der Brennstoffzelle (für Polymermembranbrennstoffzellen bis 120 °C), chemische Beständigkeit gegenüber den Reaktionsmedien und Korrosionsbeständigkeit. Außerdem muss das Material für die Herstellung der komplizierten Strömungsstrukturen leicht form- und verarbeitbar sein. Geeignete Materialien sind u.a. Graphit-Kunststoff-Verbundwerkstoffe, d.h. in sehr hohem Grad mit leitfähigen Graphit- oder Kohlenstoff-Partikeln gefüllte Kunststoffe. Konventionell werden diese Verbundwerkstoffe bei erhöhtem Druck und erhöhter Temperatur zu Plattenrohlingen verpresst und in einem zweiten Arbeitsgang beispielsweise durch CNC-Fräsen mit der Medienverteilstruktur versehen. Mittels eines entsprechend geformten Presswerkzeugs können auch in einem Arbeitsgang strukturierte Platten hergestellt werden. Jedoch sind bei diesen Verfahren die Zykluszeiten relativ lang.

Um Zykluszeit und Stückkosten zu senken, ist ein Herstellverfahren nötig, das sich für die automatisierte Massenproduktion eignet, z.B. das Spritzgussverfahren. Dieses Verfahren für die Herstellung von Kontaktplatten für elektrochemische Zellen aus Graphit-Kunststoff-Verbundwerkstoffen zu adaptieren ist jedoch schwierig, da wegen des hohen Masseanteils des Füllstoffs (>70 %) die Fließfähigkeit dieser Verbundwerkstoffe erheblich geringer ist als bei ungefüllten oder niedrig gefüllten Kunststoffen. Es wurde daher versucht, einerseits die Materialeigenschaften der Verbundwerkstoffe besser an die Anforderungen des Spritzgussverfahrens anzupassen und andererseits die Verfahrenstechnik entsprechend den Eigenschaften der Verbundwerkstoffe zu modifizieren. Materialseitige Optimierungen sind u.a. der Einsatz besonders niedrigviskoser Thermoplaste, z.B. LCP (US-A 6180275), die Zerkleinerung der Polymerpartikel nach Abkühlung mit flüssigem Stickstoff (WO-A 0044005), der Zusatz die Fließfähigkeit beeinflussender Hilfsstoffe, welche die Entmischung der Komponenten unterdrücken (US-A 6180275) sowie die Minimierung von Teilchengröße, spezifischer Oberfläche und

Aspektverhältnis der leitfähigen Partikel (US-A 6180275, EP-A 1061597, WO-A 9949530). Verfahrenstechnische Optimierungen umfassen u.a. die Verbesserung der Durchmischung der Komponenten (WO-A 0044005), die Erhöhung des Einspritzdrucks auf 13*10⁶ bis 500*10⁶ N/m² (US-A 6180275), die Erhöhung der Einspritzgeschwindigkeit auf mindestens 500 mm/s und die Erhöhung der Düsentemperatur um 40 bis 80 K über die Schmelztemperatur des Materials. (WO-A 0030203).

Bei beiden Optimierungsansätzen sind jedoch die Variationsmöglichkeiten begrenzt. Einerseits sind der Änderung von Verfahrensparametern wie z.B. der Erhöhung des Einspritzdrucks etc. maschinentechnische Grenzen gesetzt.

Andererseits lassen die hohen Anforderungen an die Leitfähigkeit keine wesentliche Reduzierung des Graphitanteils zu. Für die Herstellung spritzgussfähiger Verbundwerkstoffe geeignete Kunststoffe sind oft relativ teuer (LCP), oder es müssen Duroplaste (z.B. Vinylester wie in US-A 6180275) verwendet werden, die wegen ihres Aushärtungs-und Vernetzungsprozesses längere Zykluszeiten bedingen als Thermoplaste. So lassen sich nach US-A 20010049046 aus einem Ausgangsmaterial aus mindestens einem ungesättigten Vinylester, mindestens einem ungesättigtem Monomer zum Vernetzen der ungesättigtem Vinylester, einem Vernetzungsinitiator und bevorzugt einen Massenanteil von mindestens 65 % leitfähiger Partikel strukturierte Platten im Spritzguss ohne substantielle Nachbearbeitung herstellen. Aber typische Zykluszeiten bei typischen Plattengrößen von 2,54 bis 50,8 cm * 2,54 bis 50,8 cm (1 bis 20 inch x 1 bis 20 inch) liegen im Bereich von 1 bis 2 Minuten. Ein weiterer Nachteil von Duroplasten auf Polyesterbasis ist ihre Empfindlichkeit gegen Hydrolyse. Es ist daher wünschenswert, die Kunststoffkomponente des Verbundwerkstoffs durch einen leicht verarbeitbaren, ausreichend hydrolysebeständigen und preiswerten herkömmlichen Thermoplasten zu ersetzen, beispielsweise Polypropylen.

Eine weitere Option neben der oben beschriebenen limitierten material- und maschinentechnischen Optimierung besteht in der Optimierung des Plattenstruktur hinsichtlich der verfahrenstechnischen Möglichkeiten des Spritzgussverfahrens mit hochgefüllten Kunststoffen. Zwar gibt es bereits unabhängig von der Einführung des Spritzgussverfahrens Ausführungsformen von Kontaktplatten, die den Einsatz des schwer zu verarbeitenden leitfähigen Materials auf den funktionsbedingt notwendigen Bereich der Platte reduzieren. Kompliziert gestaltete Funktionselemente wie Durchbrüche für die Medienzufuhrwege und die Medienabfuhrwege und Abzweigungen zu den Strömungskanälen auf der Plattenoberfläche werden dabei in eine nichtleitende Peripherie (z.B. einen Rahmen) verlegt. Rahmenkonstruktionen aus Kunststoff mit integrierten Medienzufuhr- und

Medienabfuhrwegen sind seit langem bekannt für Brennstoffzellen mit flüssigem Elektrolyt (siehe z.B. US-A 3278336). Die leitfähige Platte wird beispielsweise in den Rahmen geklebt (EP-A 0620609) oder (von Hand) eingepresst (US-A 5879826). In der US-A 5514487 werden Kunststoffbauteile "edge manifold plate" beschrieben, die seitlich an die BPP angesetzt werden, im Unterschied zu einem Rahmen die BPP jedoch nicht komplett umschließen. Diese "manifold"-Platten enthalten Durchbrüche für die Medienzufuhr- und Medienabfuhrwege, von denen Verbindungsröhren zu den Strömungskanälen auf den Oberflächen der BPP abzweigen. Leitfähige BPP und nicht leitende "manifold"-Platte sind hier zwei einzelne Bauteile, die separat gefertigt werden müssen und anschließend beispielsweise mit einem Klebstoff verbunden werden. Da Klebstoffe altern, ist die strukturelle Integrität eines solchen Verbundes im Brennstoffzellenbetrieb über längere Zeit fraglich.

Für die Herstellung solcher Bauteile aus ungefülltem Kunststoff wird u.a. das Spritzgussverfahren verwendet. Beispielsweise wird eine leitfähige Platte aus korrosionsbeständigem Metall oder Kohlenstoff mit einem Kunststoffrahmen, der Durchbrüche für Medienzufuhr- und Medienabfuhrwege enthält, umspritzt (WO-A 9750139). Eine mit einem Kunststoffrahmen umspritzte leitfähige Platte kann durch Heißpressen oder durch Spritzprägen einer Vorform (eines Rohlings) aus einem Graphit-Kunststoff-Verbundwerkstoff erfolgen (WO-A 0180339).

Bekannt ist auch das Aufbringen von Dichtungen im Spritzguss auf BPP (DE-C 19910487), wobei die BPP selbst jedoch nicht im Spritzguss hergestellt worden sind, sondern mit den oben aufgeführten konventionellen Verfahren.

Aus der WO 00/410260 sind elektrisch leitfähige Kopntaktplatten für Brennstoffzellen bekannt, welche Längskanäle aufweisen mit dazwischen stehenden Stegen, wobei die Kanten der Stege und die Übergänge der Kanalwände zum Kanalgrund verrundet ausgebildet sein können, oder die Kanalwände sind abgeschrägt. Derartige Platten können beispielsweise durch Pressen oder Spritzgießen eines Verbundwerkstoffs aus einem leitfähigen Pulver, z.B. Graphit, und einem Polymerbinder, z.B. einem spritzgussfähigen Polyvinylidenfluorid, hergestellt werden, wobei der Graphitanteil 70 bis 90 % betragen sollte.

US 2002/005508 offenbart einen Prozess zum Spritzgießen u.a. von Kontaktplatten für Brennstoffzellen, wobei eine Zusammensetzung umfassend
a) ein oder mehrere ungesättigte Vorpolymerharze aus der Gruppe ungesättigte Polyester und Vinylester
b) ein ungesättigtes Material, das mit dem vorgenannten Harz copolymerisieren kann und eine terminale Ethylengruppe enthält
c) leitfähige anorganische Füllpartikel (z.B. Graphit) in einer ausreichenden Menge (mindestens 50 % der Gesamtmasse der Zusammensetzung), um dem Produkt eine Leitfähigkeit von mindestens 40 S/cm zu verleihen
d) einen Initiator, der die Copolymerisation initiiert.
e) optional einen rheologischen Modifizierer u ggf. andere Hilfsstoffe
in einem speziell für diese Zusammensetzung angepassten Spritzgussprozess verarbeitet wird. Dabei wird die vorgenannte Zusammensetzung mittels einer Einzugsschnecke, welche eine zur Position dieser Einzugsschnecke hinsichtlich der Ebene der Spritzgussmaschine vertikal ausgerichtete Komponente enthält, zugeführt, und mittels einer Phenolharzschnecke in das Spritzgusswerkzeug gefördert.

Die Aufgabe der vorliegenden Erfindung besteht darin, ein Verfahren bereitzustellen, das es ermöglicht, Kontaktplatten (Bipolarplatten) mit einer Leitfähigkeit senkrecht zur Plattenebene von mindestens 20 S/cm für elektrochemische Zellen im Spritzguss aus einem Verbundwerkstoff herzustellen, der Graphit als leitfähigen Komponente und einen leicht verarbeitbaren herkömmlichen Thermoplast als Binder enthält. Dadurch sollen die Nachteile der durch den Zeitbedarf für die Aushärtung verlängerten Zykluszeiten bei Duroplasten sowie der schwierigen Verarbeitbarkeit fluorierter Thermoplaste und der hohen Kosten von Spezialwerkstoffen wie LCP überwunden werden.

Diese Aufgabe wird durch das Verfahren nach Anspruch 1 gelöst.

Eine weitere Aufgabe der Erfindung besteht darin, ein Verfahren anzugeben, welches es ermöglicht, mittels Spritzgusstechnik eine Kontaktplatte für elektrochemische Zellen herzustellen, wobei die Kontaktplatte einen leitfähigen Bereich mit einer elektrischen Leitfähigkeit von mindestens 20 S/cm senkrecht zur Plattenebene, der Graphit als leitfähige Komponente und einen leicht verarbeitbaren herkömmlichen Thermoplast als Binder enthält, und einen an den leitfähigen Bereich anschließenden nicht leitfähigem Randbereich umfasst. Die Lösung dieser Aufgabe besteht in dem Verfahren nach Anspruch 31.

Weitere Merkmale, Einzelheiten und Vorzüge der Erfindung ergeben sich aus der folgenden detaillierten Beschreibung der Erfindung und anhand der Figuren 1 bis 9.
- Figur 1: zeigt als perspektivische Explosionsdarstellung einen Ausschnitt aus einem Brennstoffzellenstapel.
- Figur 2a: zeigt einen perspektivischen Detail-Ausschnitt aus einer Bipolarplatte
- Figur 2b: zeigt eine vergrößerte Detail-Querschnittsdarstellung gemäß dem Bereich IIb in Figur 2a,
- Figur 2c: zeigt den Querschnitt eines Strömungskanals ohne verrundeten Querschnitt
- Figur 2d: zeigt die Gestaltung des Querschnitts der Strömurtgskanäle gemäß der Schnittlinie IId-IId in Figur 2a.
- Figur 3a: zeigt verschiedene vorteilhafte Ausführungen des Angusses an einer Kontaktplatte in perspektivischer Darstellung.
- Figur 3b: zeigt im Querschnitt den Stangenanguss mit Filmanschnitt gemäß der Schnittlinie IIIb-IIIb in Figur 3a.
- Figur 3c: zeigt Details des Angusses auf der Plattenoberfläche und auf einer Hilfsanbindung gemäß der Schnittlinie IIIc-IIIc in Figur 3a,
- Figur 4: zeigt die Anordnung von Entformungsschrägen gemäß der Schnittlinie IV-IV in Figur 3a.
- Figur 5a: zeigt in Draufsicht die Positionierung von Auswerferstiften in den Dichtungsnuten und von Pressluftauswerfern auf den Kanalgründen sowie die Position eines Rechteckauswerfers.
- Figur 5b: zeigt die Positionierung von Auswerferstiften, Pressluftauswerfern und Rechteckauswerfern in einer Werkzeughälfte (Schnittlinie Vb-Vb in Figur 5a)
- Figuren 6a-d: zeigen Ausgestaltungen einer Kontaktplatte mit einem Randbereich aus nicht leitfähigem Kunststoff.
- Figuren 7a-i: zeigen Ausgestaltungen des Verbundes zwischen dem leitfähigen Bereich aus einem Graphit-Kunststoff-Verbundwerkstoff und dem Randbereich aus graphitfreiem, nicht leitfähigem Kunststoff.
- Figur 8a: zeigt einen Kunststoffrahmen für BPP mit Dichtungsfunktion in der Draufsicht.
- Figur 8b: zeigt im Teil-Querschnitt gem. der Linie VIIIb-VIIIb mehrere übereinandergestapelte Bipolar-Platten, deren Rahmen eine Dichtfunktion aufweisen.
- Figur 9: zeigt eine Teilschnittdarstellung eines zu einem Paket zusammengebrachten Funktionsverbundes gem. Figur 1 mit ausgeführter Abdichtung und Kühlkanälen.

Wie in den Figuren 1 und 2a gezeigt, ist in den den Elektroden 2, 3 zugewandten Oberflächen der Kontaktplatten jeweils eine Struktur eingelassen, welche die für die gleichmäßige Verteilung der Reaktionsmedien benötigten Strömungswege 17 definiert. Diese Struktur umfasst einerseits die von den Reaktionsmedien durchströmten vertieften Partien (im folgenden als Kanäle 17 bezeichnet, ohne damit eine Einschränkung auf eine spezielle Geometrie vorzunehmen) und andererseits die Elektrode kontaktierende, aus den Vertiefungen der Medienverteilstruktur hervorstehende Kontaktstrukturelemente 16 (z.B. die Kanäle begrenzende Stege, oder einzeln stehende Vorsprünge mit beispielsweise viereckiger Grundfläche, im folgenden unabhängig von ihrer speziellen Geometrie als Vorsprünge bezeichnet). Ein Ausschnitt aus einer Bipolarplatte 7 mit einem gewundenen Strömungskanal 17 ist in Figur 2a dargestellt.

Den Vorsprüngen 16 auf der Oberfläche der Bipolarplatte 7 entsprechen im Spritzgusswerkzeug Vertiefungen der Kavität, die komplett gefüllt werden müssen. Die Füllung dieser Vertiefungen ist um so zuverlässiger gewährleistet, je besser ihre Form dem Fließverhalten des Materials angepasst ist (fließtechnische Auslegung). Deshalb ist es vorteilhaft, alle Vorsprünge abgerundet zu gestalten, wie in den Figuren 2a und 2b dargestellt. Dies trifft sowohl für die Übergänge 18 vom Grund 19 zu den Wandflächen 20 der Kanäle 17 als auch auf die Übergänge 21 von den Kanalwänden 20 zu den Oberflächen (den Kontaktflächen) 22 der Vorsprünge 16 zu. Als vorteilhaft hat sich ein Rundungsradius von 0,1 bis 0,5 mm erwiesen. Diese Abrundungen erleichtern auch die Entformung (Entnahme der Platte aus dem Werkzeug). Die Verrundung am Übergang 21 von der Kanalwand 20 zur Oberfläche 22 des Vorsprungs 16 reduziert zwar im Vergleich zu einem nicht Vorsprung mit nicht abgerundeten Übergang 23 (Figur 2c) die elektrische Kontaktfläche zur Elektrode. Jedoch kann dieser Verlust falls nötig durch eine von vornherein ein größerflächige Auslegung des Vorsprungs 16 kompensiert werden. Solche weniger feinteiligen Strukturen erleichtern wiederum die komplette Füllung des Werkzeugs. Wird dagegen keine Verrundung vorgesehen, so können an den Vorsprüngen 16 durch unvollständige Füllung der Kavität undefinierte Formen entstehen, die wiederum den elektrischen Kontakt zur Elektrode beeinträchtigen.

Eine Alternative zu dieser Vorgehensweise besteht darin, die Vorsprünge von vornherein mindestens um den Radius der Verrundung höher auszulegen als im "stack" benötigt, und anschließend das zusätzliche Material von der Oberfläche des Vorsprungs wieder abzutragen, so dass ein Vorsprung ohne Verrundungen an den Übergängen von den Kanalwänden 20 zur Oberfläche 22 erhalten wird.

Für die Übergänge 18 vom Grund 19 zu den Wänden 20 der Kanäle 17 sind Rundungsradien zwischen einem Zehntel und der Hälfte der Breite des Kanals geeignet. Runde Kanalquerschnitte sind auch strömungstechnisch von Vorteil, da sie der Ausbildung von Totvolumen entgegenwirken. Dieser strömungstechnische Vorteil kann den Nachteil, dass eventuell zur Gewährleistung des elektrischen Kontakts der Anteil der für die Medienverteilung nicht zur Verfügung stehenden Kontaktflächen 16 an der Medienverteil-und Kontaktstruktur erhöht werden muss, zumindest partiell kompensieren.

Des weiteren ist es sowohl für die Füllung des Werkzeugs und die anschließende Entnahme des Werkstücks, als auch strömungstechnisch von Vorteil, sämtliche Richtungsänderungen der Kanäle 17 (Ecken, Kehren, Verzweigungen) abgerundet zu gestalten.

Vom Standpunkt der Werkzeugfüllung her problematisch sind weiterhin Strukturen, die Durchbrüche 24 und Verengungen aufweisen. Im Werkzeug wirken sich solche Strukturen als Verengungen des Füllungsquerschnitts, und damit als Fließbremsen für das Material aus. Besonders kritisch ist die Füllung der bezüglich des Angusses hinter den Durchbrüchen befindlichen Bereiche. Daher ist es vorteilhaft, im Werkzeug zunächst zusätzliche Fließstege vorzusehen, welche die Durchbrüche 24 überbrücken und so zum Transport des Materials in die hinter den Durchbrüchen liegenden Bereiche beitragen. Die mindestens nötige Dicke des Fließstegs wird bestimmt von der Partikelgröße des leitfähigen Füllstoffs (bei typischen Graphitpartikeln 0,3 mm). Die maximal mögliche Dicke des Fließsteges entspricht der Plattendicke. Um den Durchbruch 24 komplett zu öffnen, werden die Fließstege im gefüllten Werkzeug durch Spritzprägen oder Kernzugtechnik entfernt. Alternativ können die Fließstege auch außerhalb des Spritzgusswerkzeugs entfernt werden. Dazu wird vorteilhaft ein auf die Entformung folgender Stanzprozess in den Gesamtprozess der Plattenherstellung integriert.

Bei Ausführungsformen, die im Gegensatz zu der in Figur 1 gezeigten relativ einfachen Struktur sehr große Durchbrüchen 24 mit langen schmalen Randstegen 25 aufweisen, ist es vorteilhaft, den Fließsteg als Stützsteg 26 stehen zu lassen. Die Durchbrüche für die Medienzufuhrwege 8,10 und Medienabfuhrwege 9,11 und die Längsverschraubungen sind vorzugsweise außerhalb des leitfähigen Bereichs angeordnet, der für die Medienverteilung und die elektrische Kontaktierung der Elektrode vorgesehen ist. Typischerweise befinden sich die Durchbrüche an den Seiten oder in den Ecken der Platten und werden, um Materialeinsatz und für die Kontaktierung und Versorgung der Elektroden inaktive Plattenfläche zu minimieren, nur von einem schmalen Rand umschlossen. Dieser Bereich der Platte ist eine mechanische Schwachstelle, daher ist es vorteilhaft, zur Stabilisierung des Randstegs einen Stützsteg 26 vorzusehen, der den Durchbruch überbrückt. Um dennoch über den gesamten Querschnitt des Durchbruchs eine gleichmäßige Medienverteilung zu gewährleisten, ist der Stützsteg 26 bevorzugt dünner als die Platte selbst ausgebildet. Aus Stabilitätsgründen ist für den Stützsteg eine Mindeststärke von 0,8 mm notwendig. Nach Passieren des Stützstegs 26 können sich die durch den Stützsteg geteilten Strömungen wieder vereinigen. Die Störung des Strömungsverlaufs durch den Stützsteg muss gering gehalten und die Ausbildung eines Totvolumens hinter dem Stützsteg verhindert werden. Dies wird durch den abgerundeten, stromlinienförmigen Querschnitt des Stützsteges 26 stromlinienförmig gestaltet werden. (Figur 2d)

Aus Stabilitätsgründen ist es am günstigsten, den Stützsteg 26 in der Mitte des Durchbruchs 24 anzuordnen. Jedoch ist auch eine außermittige Anordnung möglich, sofern dadurch die Stabilität nicht beeinträchtigt wird. Für die Homogenität der Strömung ist es von Vorteil, wenn die Fließstege nicht in allen aufeinander-folgenden Platten fluchtend angeordnet sind, sondern gegeneinander versetzt.

Sollte auch mittels Fließstegen keine ausreichende Füllung der bezüglich des Angusses hinter den Durchbrüchen liegenden Bereiche erreicht werden, so können alternativ die Bereiche der Durchbrüche 24 im Werkzeug komplett gefüllt werden, und die gewünschten Durchbrüche 24 werden anschließend ausgestanzt. Wie bei der Entfernung der Fließstege kann das Stanzen der Durchbrüche innerhalb des Werkzeuges mittels Kernzugtechnik oder Spritzprägen erfolgen, oder in einem auf die Entformung folgenden integrierten Prozessschritt.

Weiterhin kann in der Plattenoberfläche eine Nut 27 für die Aufnahme einer Dichtung vorgesehen sein.

Die Platte kann beidseitig mit einer Medienverteil- und Kontaktstruktur mit den oben beschriebenen Merkmalen versehen sein. Dabei wird die Kanaltiefe bevorzugt so gewählt, dass die Restwandstärke an den dünnsten Stellen der Platte 0,8 mm nicht unterschreitet.

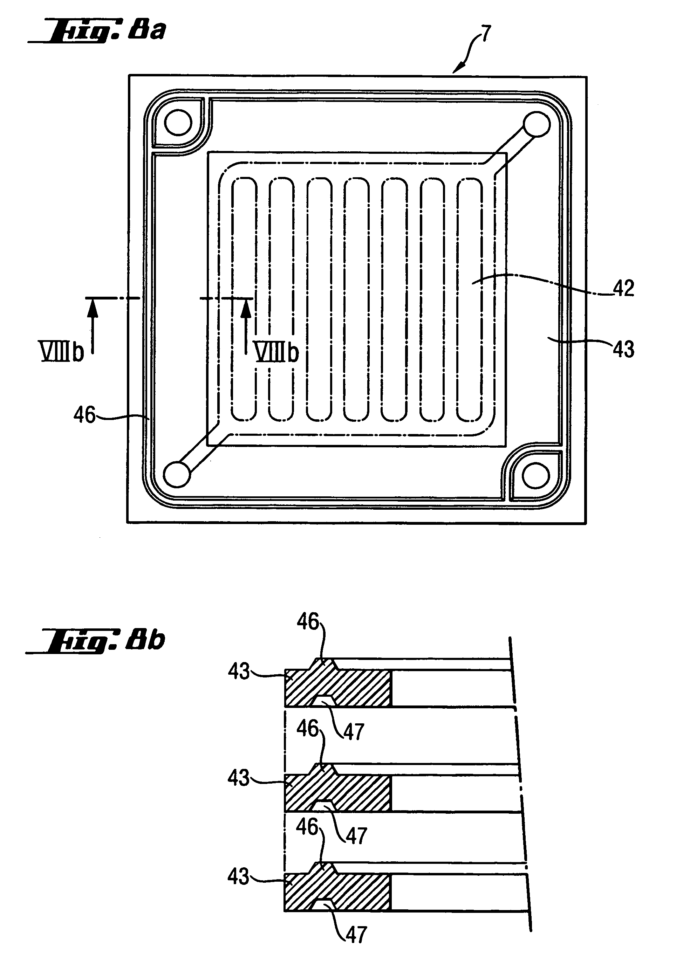

Einen starken Einfluss auf die Füllung des Werkzeugs hat auch die Gestaltung des Angusses (Figuren 3a und 3b). Zur besseren Übersicht wird in Figur 3a auf die Darstellung der Medienverteilstruktur verzichtet. Es sei darauf hingewiesen, dass die dargestellten bzw. nicht dargestellten Strukturen keine Festlegung auf eine bestimmte Struktur bedeuten, denn die im folgenden beschriebenen, den Anguss betreffenden Aspekte des Verfahrens sind unabhängig von der speziellen Strömungswegestruktur, und treffen gleichermaßen auf Bipolarplatten, Endplatten und Kühlplatten, also allgemein Kontaktplatten zu.

Geeignet ist ein Stangenanguss 28 mit Filmanschnitt 29. Die Dicke des Filmanschnitts 29 kann variiert werden zwischen einem von der Partikelgröße des leitfähigen Füllstoffs bestimmten Minimum (bei typischen Graphitpartikeln 0,3 mm) und der Dicke der Kontaktplatte 7. Die Breite des Anschnitts kann im Bereich von minimal 5 mm bis zur Breite der Platte 7 gewählt werden.

Geeignet ist weiterhin ein Heißkanalsystem mit einer oder mehreren Heißkanaldüsen. Wegen der im Vergleich zu ungefüllten Kunststoffen geringeren Fließfähigkeit des Verbundwerkstoffs muss der Anschnittdurchmesser der Heißkanaldüse größer sein als beim Spritzguss von ungefüllten Kunststoffen üblich, bevorzugt mindestens 5 mm.

Um die Angussmarkierungen möglichst klein zu halten, können Angusskanäle mit Nadelverschluss (nicht dargestellt) benutzt werden. Die Nadelverschlüsse werden hydraulisch angesteuert. Bei der Verwendung von Angusskanälen mit Nadelverschluss kann der Anguss auch direkt auf der Plattenoberfläche erfolgen, wenn deren Struktur Bereiche enthält, wo genügend Platz für die Positionierung einer solchen Angussdüse zur Verfügung steht Dabei sollten erhabene Angussmarkierungen in Gestalt von vorstehenden Graten vermieden werden. Um dies zu erreichen, wird die Mündung des Angusskanals im Werkzeug positioniert, dass sie tiefer liegt als die umgebende Plattenoberfläche der im Werkzeug zu formenden Platte (Vertiefung 30 in den Figuren 3a und 3c).

Bieten weder Dichtungskanäle noch Vorsprünge genügend Fläche für einen Heißkanalanguss, so können an den Rändern der Platte kleine Ausbuchtungen 31 als Hilfsflächen 32 für die Positionierung von Angusskanälen vorgesehen werden. Diese Hilfsanbindungen 31 müssen, wenn sie nicht in die Struktur der Kontaktplatte 7 integriert werden können, nachträglich entfernt werden.

Für eine gleichmäßige Füllung des Werkzeugs ist es vorteilhaft, die einzelnen Anspritzdüsen in Kaskade anzusteuern. Dadurch wird vermieden, dass mehrere Fließfronten gleichzeitig existieren, bei deren Zusammentreffen Fließnähte und Lufteinschlüssse entstehen können.

Die geringe Dicke der Kontaktplatte 7 (typischerweise 1 bis 3 mm) kann Entformungsschwierigkeiten verursachen. Um die Entformung zu erleichtern, ist es vorteilhaft, alle quer zur Plattenebene verlaufenden Flächen mit einer Neigung von 0,5 bis 30° relativ zur Senkrechten zu versehen (Entformungsschrägen, siehe Figur 4). Entformungsschrägen werden sowohl an den Stirnflächen 33 der Kontaktplatte als auch an den Wandflächen 34 der Durchbrüche 24, den seitlichen Wandflächen 22 der Kanäle 17. und ggf. an Absätzen 35 auf der Plattenoberfläche vorgesehen. Die durch den Absatz 35 umschriebene Ausnehmung 36 in der Plattenoberfläche dient der Einbettung der Elektrode 2 bzw. 3.

Die Struktur der Kontaktplatte 7 darf bei der Entformung nicht durch die Auswerfer beeinträchtigt werden. Herkömmliche Auswerferstifte 37 hinterlassen Markierungen (Abdrücke) auf der Oberfläche des Werkstücks. Solche Auswerfer 37 werden daher bevorzugt so positioniert, dass sie beim Entformungsprozess auf den Grund von Dichtungsnuten 27 stoßen. (Figuren 5a und 5b) Die dort zurückbleibenden Auswerfermarkierungen beeinträchtigen die Funktion der Kontaktplatte 7 nicht, da sie nach dem Füllen der Dichtungsnut mit einer Dichtung vollständig von der sich der Gestalt der Nut anpassenden Dichtung überdeckt und abgedichtet werden.

Geeignet sind weiterhin Rechteckauswerfer 38 (Figuren 5a und 5b). Diese Auswerfer haben Aussparungen und hinterfassen die Kontaktplatte 7 an den Kanten, so dass es genau in den Aussparungen der Auswerfer 38 liegt. Die Aussparungen sind so geformt, dass sie an der Stirnfläche des Werkstücks über die Trennebene der beiden Werkzeughälften hinausragen. Bei dieser Auswerfergestaltung entfallen die Zwangsrückstoßer.

Noch vorteilhafter ist das Auswerfen mittels Pressluft, da hier keine Markierungen zurückbleiben. Dazu werden im Werkzeug 39 Pressluftkanäle 40 vorgesehen, die mit Stiften 41 verschlossen sind. Beim Entformungsvorgang werden die Stifte 41 nach hinten (ins Innere des Werkzeugs 39) zurückgezogen und geben die Pressluftkanäle 40 frei. Die Pressluftkanäle werden im Werkzeug so angeordnet, dass ihre Mündungen sich auf dem Grund der Strömungskanäle 17 befinden. Der Durchmesser der Stifte und dementsprechend der Mündungen der Pressluftkanäle kann ein bis acht Zehntel der Breite des Strömungskanals 17 betragen.

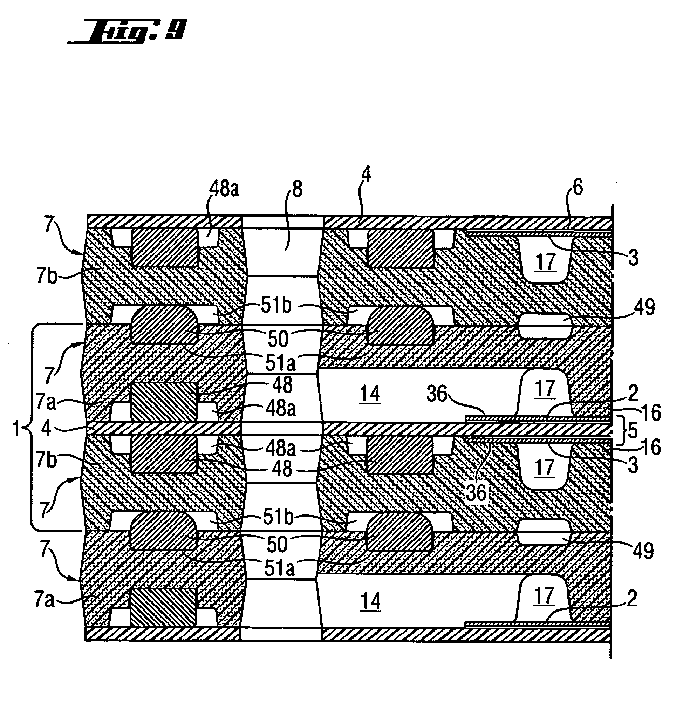

Um die Schwierigkeiten bei der Füllung der komplizierten Strukturen der Platte mit dem hochviskosen Material zu verringern, ist es vorteilhaft, den Einsatz dieses Materials auf die Bereiche zu reduzieren, die funktionsbedingt leitfähig sein müssen. In dieser Ausführungsform können außerhalb der Kontaktstruktur liegende Funktionselemente wie die Durchbrüche für die Medienzufuhr 8,10 und die Medienabfuhr 9, 11 und die davon abzweigende Ein- und Auslässe 14,15 zu den Kanälen 17 auf den Plattenoberflächen in die Peripherie der Platte verlegt werden, die aus einem leichter zu bearbeitenden, nicht leitfähigen Material besteht (Figuren 6a bis 6d).

In einem Ausführungsbeispiel ist der leitfähigen Bereich 42 der Kontaktplatte 7, deren Medienverteil- und Kontaktstruktur in Figur 6 zur Vereinfachung weggelassen wurde, komplett von einem nicht leitfähigen Kunststoffrahmen 43 umschlossen (Figuren 6a und 6b). Wie in Figur 6b gezeigt, müssen nicht alle Seiten dieses Rahmens 43 die gleiche Breite b haben. So kann der Rahmen an einer oder mehreren Kanten des leitfähigen Bereiches breiter ausgebildet sein, um Platz für die Aufnahme von Funktionselementen zur Verfügung zu stellen. Eine weitere Ausgestaltungsmöglichkeit besteht darin, dass an einzelnen Kanten des leitfähigen Bereichs 42 der Kontaktplatte 7 Bereiche 43 aus einem nichtleitfähigen Material anschließen, um Funktionselemente aufzunehmen, die nicht elektrisch leitend sein müssen. In den Figuren 6c und 6d sind einige Varianten dargestellt. Allgemein besteht diese Ausführungsform darin, dass an mindestens einer Kante der Platte ein Bereich 43 aus nicht leitfähigem Material mit beliebiger Breite b anschließt, der leitfähige Bereich aber nicht komplett von nicht leitfähigen Randbereichen 43 umschlossen wird.. Entsprechend der vorliegenden Erfindung wird die komplette Kontaktplatte mit den leitfähigen Bereichen 42 aus dem hochgefüllten Material und den nicht leitfähigen Bereichen 43 aus graphitfreiem Material im Spritzguss in einem Werkzeug hergestellt (Zweikomponenten-Verfahren).

Zwischen den aus verschiedenen Werkstoffen bestehenden Bereichen 42 und 43 der Kontaktplatte muss ein stabiler, zuverlässiger Verbund hergestellt werden. Dafür werden erfindungsgemäß am Übergang der beiden Materialien Strukturen ausgebildet, die eine stoffschlüssige Verbindung, Verzahnung oder Verkeilung zwischen beiden Bereichen ermöglichen (Figuren 7a bis 7i). Die stoffschlüssige Verbindung zeigt Figur 7b. Um zusätzlich eine formschlüssige Verbindung zu erreichen, sind z.B. schwalbenschwanzförmige (Figur 7c) oder pilzförmige (Figur 7g) Strukturen oder Vorsprünge 44 mit Zähnen, Sägezähnen (Figuren 7e und 7f) oder wellenförmigen Strukturen (Figur 7d) geeignet. Ein weiterer vorteilhafter Verbund besteht aus einen in den nicht leitfähigen Bereich 43 herein ragenden Vorsprung 44 (Figuren 7h und 7i) gebildet, der eine durchgehende Bohrung 45 enthält. Die Bohrung füllt sich beim Spritzgießen des angrenzenden Bereiches 43 mit dem nichtleitfähigen (graphitfreien) Kunststoff, so dass beide Werkstoffe unauflöslich ineinander greifen.

Vorteilhaft für den Verbund beider Werkstoffe ist auch der Effekt, dass sich beim Spritzguss von Graphit-Kunststoff-Verbundwerkstoffen die Kunststoffkomponente aufgrund ihrer größeren Fließfähigkeit an der Oberfläche des Werkstücks anreichert. Diese mit Kunststoff angereicherte Schicht verbessert die Haftung des Kunststoff-Dichtungsrahmens an den Außenkanten der leitfähigen Platte.

Der Rahmen kann so ausgebildet sein, dass er gleichzeitig eine Dichtungsfunktion erfüllt. Es sei angemerkt, dass die Membran 4 nicht bis in den Bereich dieser Dichtungsfunktion reichen sollte, denn die Membranmaterialien nach dem derzeitigen Stand der Technik sind empfindlich gegen mechanische Beanspruchungen, wie sie beim Zusammenpressen der Dichtungsrahmen der aufeinanderfolgenden Zellen auftreten.

Besonders vorteilhaft für die Vermeidung von Leckagen zwischen den aufeinander-folgenden Zellen 1 sind Rahmen 43 aus einem Elastomer. Dieser Dichtungsrahmen 43 ist so ausgebildet, dass er im zusammengepressten Zustand die mit der in die Ausnehmung 36 eingebetteten Elektrode 2 oder 3 bündige Oberfläche der Platte 7 um die Hälfte der Dicke der mit den Katalysatoren 6 beschichteten Membran 4 überragt. Im Zusammenwirken mit dem ebenso ausgebildeten Dichtungsrahmen 43 der folgenden Kontaktplatte wird die zwischen den Platten liegende MEA 5 dicht umschlossen.

Bei Ausführungsformen, die keine Ausnehmung 36 zur Einbettung der Elektrode vorsehen, überragt der erfindungsgemäße Dichtungsrahmen 43 im zusammengepressten Zustand die Kontaktstrukturelemente 16 um die halbe Dicke der gesamten Membran-Elektroden-Einheit 5, um im Zusammenwirken mit den ebenso ausgebildeten Rahmen der folgenden Kontaktplatte 7die MEA 5 dicht zu umschließen.

Zur Veranschaulichung der Größenverhältnisse in diesen Ausführungsformen sei angemerkt, dass die Dicken der derzeit gebräuchlichen Membranen 5 100 bis 200 µm betragen und die Dicken gebräuchlicher Elektroden 2, 3 200 bis 300 µm.

Auch ein Rahmen aus einem beliebigen, unter den Bedingungen des Brennstoffzellenbetriebs stabilen Kunststoff kann so gestaltet werden, dass im Zusammenwirken mit den Rahmen der angrenzenden Zellen eine Dichtungsfunktion erfüllt wird (Figuren 8a und 8b). Dazu wird der Rahmen 43 auf einer Oberfläche mit einem umlaufenden Sims (Feder) 46 und auf der rückwärtigen Oberfläche mit einer passenden Nut 47 versehen. Beim Anziehen der Längsverschraubung des "stack" greift jede Feder in die Nut des Rahmens der folgenden Platte (Nut-Feder-Verbindung), so dass ein dichter Abschluss erreicht wird. Die Querschnitte der ineinandergreifenden Vorsprünge und Nuten sind typischerweise trogförmig. Zur Verbesserung der Dichtwirkung kann in die Nut 47 auch ein konventionelles Dichtungsmaterial (nicht dargestellt), bevorzugt ein flacher Dichtungsstreifen, eingelegt werden, der dann unter Einwirkung des Simses 46 auf dem Rahmen 43 der angrenzenden Platte zusammengepresst wird und so den Spalt zwischen beiden Rahmen 43 dicht abschließt. Insbesondere bei Verwendung einer solchen zusätzlichen Flachdichtung ist es nicht zwingend erforderlich, dass die Rahmen 43 aus einem elastischen Kunststoff gefertigt sind.

Alternativ kann ein Dichtungsmaterial im Spritzguss auf die Oberfläche der Platte bzw. des Rahmen aufgetragen werden. Zur Aufnahme des Dichtungsmaterials werden in der Oberfläche der Platte bzw. des Rahmens Dichtungsnute 27 vorgesehen.

Figur 9 zeigt einen Ausschnitt aus einem Stapel ("stack") aus mehreren Brennstoffzellen 1 im Querschnitt mit beispielhaften Ausführungen der Dichtungen. Die Bipolarplatten zwischen den Membran-Elektroden-Einheiten 5 sind als Verbund aus je zwei Teilplatten 7a, 7b ausgebildet. Beispielhaft für die den "stack" durchquerenden Zufuhrwege und

Abfuhrwege für die Reaktions- und Kühlmedien ist der Brennstoffzufuhrweg 8 dargestellt. Der Brennstoffzufuhrweg 8 ist über mindestens einen Einlass 14 mit den Strömungswegen 17 der Medienverteilstruktur auf der anodenseitigen Teilplatte 7a verbunden.

Die Dichtungen 48 schließen die Medienverteilstrukturen auf den der Membran-Elektroden-Einheit 5 zugewandten Oberflächen der BPP-Teilplatten 7a, 7b gegen die diese Platten durchquerenden Zufuhrwege und Abfuhrwege der jeweils anderen Medien ab. Die Elektroden 2, 3 sind in Ausnehmungen 36 eingebettet.. Der Randbereich der Membran 4 ragt über die Elektroden 2, 3 hinaus. Die Dichtungen 48 liegen zwischen der Oberfläche einer Kontaktplatte 7 und der angrenzenden Membran 4.

Elektrolytmembranen nach dem derzeitigen Stand der Technik sind sehr empfindlich gegen mechanische Beanspruchung, beispielsweise durch Faltung. Die Dichtungen 48 werden daher bevorzugt flach ausgebildet, um eine solche Beanspruchung der Membran zu vermeiden. Die Dichtungsnut 48a ist bereiter ausgebildet als Dichtung 48, um beim Zusammenpressen der Dichtung 48 eine seitliche Verdrängung des Dichtungsmaterials zu ermöglichen.

Besteht die BPP 7, wie in Figur 9 gezeigt, aus einer Anoden- und einer Kathodenplatte 7a, und 7b, die eine Kühlmittelverteilstruktur 49 umschließen (Kühlplattenverbund), so sind auch zwischen diesen Platten Dichtungen 50 nötig, um die Kühlmittelverteilungskanäle 49 und die Zufuhr- und Abfuhrwege der anderen Medien gegeneinander abzudichten. Da Dichtung 50 nicht die empfindliche Membran berührt, sondern zwischen zwei Platten 7a und 7b liegt, ist es nicht notwendig, die Dichtung 50 flach auszubilden.

Damit die Restwandstärke der Platte 7 im Bereich der Dichtungsnut 51 nicht zu gering wird, insbesondere nicht dünner als der Mindestwert von 0,8 mm, ist es vorteilhaft, wenn die Dichtung 50 nicht in ihrer gesamten Höhe von nur einer der beiden Platten 7a, 7b aufgenommen werden muss. Deshalb werden in den aneinandergrenzenden Platten miteinander kooperierende Dichtungsnuten 51b und 51b mit jeweils einem Teil, bevorzugt der Hälfte der zur Aufnahme der Dichtung 51 im zusammengepressten Zustand benötigten Höhe vorgesehen. Bei der Herstellung der Platte wird Dichtungsnut 51a in der Breite komplett mit dem Material der Dichtung 50 gefüllt, die ihrerseits über die Plattenoberfläche übersteht. Beim Verbinden der Platten 7a und 7b werden die überstehenden Bereiche der Dichtung 50 von der kooperierenden Dichtungsnut 51b aufgenommen. Diese Dichtungsnuten 51b sind breiter als Dichtung 50 im nicht zusammengepressten Zustand, so dass beim Zusammenpressen der Dichtung das überstehende Dichtungsmaterial seitlich verdrängt werden kann.

In Figur 9 ist ein Kühlplattenverbund aus zwei Teilplatten 7a, 7b, in deren einander zugewandten Oberflächen die Kühlmittelverteilungskanäle genau spiegelbildlich ausgebildet sind, dargestellt. Sind die Platten aufeinander gestapelt, so liegen die Kühlmittelkanäle der Teilplatten 7a und 7b einander genau gegenüber und bilden so die Kühlmittelverteilstruktur.

Eine alternative Ausführungsform besteht darin, dass die Kühlmittelverteilstruktur 49 nur in eine der beiden Teilplatten eingelassen ist, während die angrenzende Oberfläche der anderen Teilplatte eben ist und die Kanäle auf der ersten Platte abdeckt.

Es ist vorteilhaft, wenn der Bereich der Platte, auf dem die Dichtung aufliegen soll, nicht aus dem Graphit-Kunststoff-Verbundwerkstoff besteht, sondern aus einem dem Dichtungs-Material ähnlichen bzw. mit dem Dichtungsmaterial kompatiblen graphitfreien Kunststoff. Aufgrund der Ähnlichkeit zwischen beiden Kunststoffmaterialien kann ein besserer Materialverbund erreicht werden als zwischen dem Kunststoff der Dichtung und dem Graphit des leitfähigen Bereiches. Um die Dichtung in dieser Weise vorteilhaft als Kunststoff-Kunststoff-Verbund auszubilden, ist es nötig, dass der Bereich der Kontaktplatte, auf dem die Dichtung aufliegen soll, z.B. der Rahmen, aus graphitfreien Kunststoff besteht.

Auch bei Ausführungsformen der Kontaktplatte ohne Rahmen oder Randbereiche 43 aus graphitfreiem Kunststoff können das Formen der Platte aus einem Graphit-Kunststoff-Verbundwerkstoff und das Aufbringen der Dichtung auf die Platte erfindungsgemäß in einem Werkzeug in Zweikomponenten-Technik durch Spritzguss erfolgen. Die Übergänge von den Dichtungsnuten zur Plattenoberfläche werden - ebenso wie bei den Strömungskanälen- verrundet, um eine gute Füllung des Spritzgusswerkzeugs mit dem Graphit-Kunststoff-Verbundwerkstoff zu erzielen.

Entsprechend der Erfindung wird die Platte mit der Medienverteil- und Kontaktstruktur, optional mit einem nichtleitfähigen Bereich mit weiteren Funktionselementen, einschließlich der Dichtung im Spritzgussverfahren in einem Werkzeug gefertigt (Mehrkomponenten-Verfahren).

Für die Herstellung einer leitfähigen Platte mit den oben angegebenen für den Brennstoffzellenbetrieb benötigten Strukturmerkmalen aus einem Verbundwerkstoff aus Polypropylen und einem Massenanteil von 86 % synthetischem Graphit mit einer Plattenfläche von 140 mm x 140 mm wird eine Zykluszeit von 45 bis 50 Sekunden benötigt. Die Leitfähigkeit quer zur Plattenebene entspricht mit mindestens 20 S/cm den Anforderungen für den Brennstoffzellenbetrieb. Typische Strukturabmessungen für die Strömungskanäle 17 sind 0,6 bis 0,8 mm (Breite und Tiefe)

Zur Verminderung des Kontaktwiderstands an den Oberflächen der leitfähigen Platten zu vermindern, kann die wenige Mikrometer dicke Oberflächenschicht, in der die Kunststoffkomponente des Verbundwerkstoffs angereichert ist, durch Behandlung mit einem Abrasiv, beispielsweise durch Sandstrahlen, abgetragen werden.

### Bezugszeichenliste

- 1: Brennstoffzellenstack
- 2: Anode
- 3: Kathode
- 4: Membran
- 5: MEA
- 6: Katalysator
- 7: BPP
- 7a: Teilplatte
- 7b: Teilplatte
- 8: Brennstoffzufuhr
- 9: Brennstoffabfuhr
- 10: Oxidationsmittelzufuhr
- 11: Oxidationsmittelabfuhr
- 12: Medienverteilstruktur (Anode)
- 13: Medienverteilstruktur (Kathode)
- 14: Einlass
- 15: Auslass
- 16: Kontaktstrukturelement (Steg oder Vorsprung)
- 17: Strömungsweg (Kanal)
- 18: Übergang vom Kanalgrund zur Wandfläche
- 19: Grund des Strömungswegs
- 20: Wandfläche
- 21: Übergang von der Wandfläche zur Kontaktfläche
- 22: Kontaktfläche
- 23: Nicht erfindungsgemäßer Übergang von der Wandfläche zur Kontaktfläche
- 24: Durchbruch für die Zu- oder Abfuhr von Reaktions- oder Kühlmedien
- 25: Randsteg
- 26: Stützsteg
- 27: Dichtungsnut
- 28: Stangenanguss
- 29: Filmanschnitt
- 30: Vertiefung
- 31: Ausbuchtung
- 32: Hilfsfläche
- 33: Stirnfläche
- 34: Wandfläche des Durchbruchs
- 35: Absatz
- 36: Ausnehmung zur Aufnahme der Elektrode
- 37: Auswerferstift
- 38: Rechteckauswerfer
- 39: Werkzeug
- 40: Pressluftkanal
- 41: Stift
- 42: leitfähiger Bereich
- 43: nicht leitfähiger Randbereich (z.B. Rahmen)
- 44: Vorsprung
- 45: Bohrung
- 46: Sims (Feder)
- 47: Nut
- 48: Dichtung
- 48a: Dichtungsnut für Dichtung 48
- 49: Kühlmittelverteilstruktur
- 50: Dichtung
- 51: Dichtungsnut für Dichtung 50
- 51a: Teilnut
- 51 b: Teilnut
- 52: Medientransportweg

- b: Breite
- A: Anodenseite
- K: Kathodenseite

## Patentansprüche

1. Verfahren zur Herstellung einer Kontaktplatte für eine elektrochemische Zelle (1) mit einer elektrischen Leitfähigkeit senkrecht zur Plattenebene von mindestens 20 S/cm aus einem Verbundwerkstoff aus Polypropylen und synthetischem Graphit mit einem Massenanteil an Graphit von mindestens 80 %,
wobei die Kontaktplatte folgende Funktionselementeenthält:
- Durchbrüche (24) für die Zuführwege (8, 10) und die Abfuhrwege (9, 11) der an den Elektroden (2, 3) der elektrochemischen Zelle (1) reagierenden Medien,
- auf mindestens einer Plattenoberfläche eine in die Oberfläche eingelassene Medienverteilstruktur (12, 13) mit Strömungswegen (17) zur Verteilung eines an der angrenzenden Elektrode (2, 3) reagierenden Mediums und eine aus dieser Medienverteilstruktur hervorstehende Kontaktstruktur mit Kontaktstrukturelementen (16) zur elektrischen Kontaktierung einer an die Kontaktplatte angrenzenden Elektrode (2, 3),
- Verbindungen (14, 15) der Medienverteilstruktur (12, 13) auf der Plattenoberfläche mit dem Zuführweg (8, 10) und dem Abfuhrweg (9, 11) eines an der angrenzenden Elektrode (2,3) reagierenden Mediums,
durch Spritzgießen in einem Spritzgusswerkzeug, in dessen Kavität
• sämtliche Übergänge (18) von den Grundflächen (19) zu den Wandflächen (20) der Strömungswege (17) in der Medienverteilstruktur (12, 13) und
• sämtliche Übergänge (21) von den Wandflächen (20) der Strömungswege (17) in der Medienverteilstruktur (12, 13) zu den die angrenzende Elektrode (2, 3) kontaktierenden Oberflächen (22) der Kontaktstrukturelemente (16) verrundet sind.

2. Verfahren zur Herstellung einer Kontaktplatte nach Anspruch 1, **dadurch gekennzeichnet, dass** der Radius der Verrundung am Übergang (18) von der Grund- (19) zur Wandfläche (20) eines Strömungswegs (17) mindestens ein Zehntel und höchstens die Hälfte der Breite des Strömungswegs (17) beträgt.

3. Verfahren zur Herstellung einer Kontaktplatte nach Anspruch 1, **dadurch gekennzeichnet, dass** der Radius der Verrundung am Übergang (21) von der Wandfläche (20) des Strömungswegs (17) zur Kontaktfläche (22) des Kontaktstrukturelements (16) mindestens 0,1 mm und höchstens 0,5 mm beträgt.

4. Verfahren zur Herstellung einer Kontaktplatte nach Anspruch 1, **dadurch gekennzeichnet, dass** die hervorstehenden Kontaktstrukturen (16) mit den verrundeten Übergängen (21) von den Kontaktflächen (22) der Kontaktstrukturelemente (16) zu den Wandflächen (20) der Strömungswege (17) mindestens um den Radius der Verrundung höher ausgelegt werden als für den Einbau im Zellenstapel benötigt und anschließend mindestens um den Radius der Verrundung abgetragen werden, so dass ein durch die Verrundung bedingter Verlust an Kontaktfläche (22) vermieden wird.

5. Verfahren zur Herstellung einer Kontaktplatte nach Anspruch 1, **dadurch gekennzeichnet, dass** das Werkzeug so ausgelegt ist, dass sämtliche Richtungsänderungen der Strömungswege (17) in der Medienverteilstruktur (12, 13)verrundet sind.

6. Verfahren zur Herstellung einer Kontaktplatte nach Anspruch 1, **dadurch gekennzeichnet, dass** während des Spritzgussprozesses die Durchbrüche (24) durch Fließstege überbrückt werden.

7. Verfahren nach Anspruch 6, **dadurch gekennzeichnet, dass** die Fließstege im gefüllten Spritzgusswerkzeug durch Spritzprägen oder Kernzugtechnik entfernt werden.

8. Verfahren zur Herstellung einer Kontaktplatte nach Anspruch 1, **dadurch gekennzeichnet, dass** die Durchbrüche (24) im gefüllten Spritzgusswerkzeug durch Spritzprägen oder Kernzugtechnik hergestellt werden.

9. Verfahren zur Herstellung einer Kontaktplatte nach Anspruch 1, **dadurch gekennzeichnet, dass** das Werkzeug so gestaltet ist, dass Stützstege (26) gebildet werden, welche die Durchbrüche (24) in der Kontaktplatte überbrücken.

10. Verfahren nach Anspruch 9 **dadurch gekennzeichnet, dass** die Dicke des Stützstegs (26) mindestens 0,8 mm beträgt und der Querschnitt des Stützsteges (26) abgerundet ist.

11. Verfahren zur Herstellung einer Kontaktplatte nach Anspruch 1, **dadurch gekennzeichnet, dass** beim Spritzguss der Anguss als Stangenanguss (28) mit Filmanschnitt (29) erfolgt.

12. Verfahren nach Anspruch 11, **dadurch gekennzeichnet, dass** die Dicke des Filmanschnitts (29) mindestens 0,3 mm und maximal die Dicke der Kontaktplatte beträgt und die Breite des Filmanschnitts (29) mindestens 5 mm und maximal die Breite der Kontaktplatte beträgt.

13. Verfahren zur Herstellung einer Kontaktplatte nach Anspruch 1, **dadurch gekennzeichnet, dass** der Anguss über Heißkanaldüsen mit Nadelverschlüssen erfolgt.

14. Verfahren nach Anspruch 13, **dadurch gekennzeichnet, dass** der Anschnittdurchmesser einer Heißkanaldüse mindestens 5 mm beträgt.

15. Verfahren nach Anspruch 13, **dadurch gekennzeichnet, dass** der Anguss über in Kaskade ansteuerbare Anspritzdüsen erfolgt.

16. Verfahren zur Herstellung einer Kontaktplatte nach Anspruch 13, **dadurch gekennzeichnet, dass** im Werkzeug die Mündung mindestens eines Angusskanals tiefer liegt als die Oberfläche der in dem Werkzeug zu formenden Kontaktplatte.

17. Verfahren zur Herstellung einer Kontaktplatte nach Anspruch 1, **dadurch gekennzeichnet, dass** der Anguss über mindestens eine Hilfsfläche (32) in Form einer am Plattenrand vorgesehenen Ausbuchtung (31), auf der Angusskanäle positioniert sind, erfolgt und diese Hilfsfläche nachträglich entfernt wird.

18. Verfahren zur Herstellung einer Kontaktplatte nach Anspruch 1, **dadurch gekennzeichnet, dass** das Werkzeug so ausgelegt ist, dass alle quer zur Plattenebene verlaufenden Flächen (20, 33, 34, 35) eine Neigung von 0,5 bis 30° relativ zur Senkrechten zur Plattenoberfläche aufweisen.

19. Verfahren zur Herstellung einer Kontaktplatte nach Anspruch 1, **dadurch gekennzeichnet, dass** die Entformung mittels auf dem Grund der Dichtungsnuten (27) angreifender Auswerferstifte (37) erfolgt

20. Verfahren zur Herstellung einer Kontaktplatte nach Anspruch 1, **dadurch gekennzeichnet, dass** die Entformungmittels die Kontaktplatte hinterfassender Rechteckauswerfer (38) mit an der Stirnfläche (33) der Kontaktplatte über die Trennebene der beiden Werkzeughälften hinausragenden Aussparungen erfolgt.

21. Verfahren zur Herstellung einer Kontaktplatte nach Anspruch 1, **dadurch gekennzeichnet, dass** die Entformung mittels Pressluftauswerfern erfolgt, wobei die Mündungen der Pressluftkanäle (40) auf den Grundflächen (19) der Strömungswege (17) der Medienverteilstruktur (12,13) liegen.

22. Verfahren zur Herstellung einer Kontaktplatte nach Anspruch 1, wobei nur eine Oberfläche der Kontaktplatte mit einer Medienverteilstruktur versehen ist.

23. Verfahren zur Herstellung einer Kontaktplatte nach Anspruch 1, wobei beide Oberflächen der Kontaktplatte mit einer Medienverteilstruktur versehen sind.

24. Verfahren zur Herstellung einer Kontaktplatte nach Anspruch 23, wobei das Werkzeug so dimensioniert ist, dass die Stärke der Kontaktplatte zwischen den Grundflächen (19) der Strömungswege (17) der Medienverteilstruktur auf der ersten Oberfläche der Kontaktplatte und den Grundflächen (19) der Strömungswege (17) der Medienverteilstruktur auf der entgegengesetzten Oberfläche der Kontaktplatte mindestens 0,8 mm beträgt.

25. Verfahren zur Herstellung einer Kontaktplatte nach Anspruch 1, **dadurch gekennzeichnet, dass** auf der mit der Medienverteilstruktur (12, 13) versehenen Plattenoberfläche eine Ausnehmung (36) für die Einbettung einer Elektrode (2, 3) gebildet wird.

26. Verfahren zur Herstellung einer Kontaktplatte nach Anspruch 1, **dadurch gekennzeichnet, dass** auf mindestens einer der Plattenoberflächen Nuten (27; 48a, 51a, 51b) zur Aufnahme von Dichtungen gebildet werden.

27. Verfahren zur Herstellung einer Kontaktplatte nach Anspruch 1, **dadurch gekennzeichnet, dass** auf mindestens einer der Plattenoberflächen Nuten (27; 48a, 51a, 51b) zur Aufnahme von Dichtungen gebildet werden und ein Dichtungsmaterial aufgetragen wird, das von den Dichtungsnuten aufgenommen wird, wobei Kontaktplatte und Dichtung in einem Werkzeug in Zweikomponenten-Technik im Spritzguss hergestellt werden.

28. Verfahren nach Anspruch 27, **dadurch gekennzeichnet, dass** die Dichtungsnuten (48a, 51b) breiter ausgebildet werden als die von ihnen aufzunehmenden Dichtungen (48, 50) im nicht zusammengepressten Zustand.

29. Verfahren nach Anspruch 27, **dadurch gekennzeichnet**, die Dichtungsnut (51a) beim Aufbringen der Dichtung (50) in der Breite komplett mit dem Dichtungsmaterial gefüllt wird und die Dichtung (50) soweit über die Plattenoberfläche übersteht, dass beim Verbinden der Platten (7a) und (7b) die überstehenden Bereiche der Dichtung (50) von der kooperierenden Dichtungsnut (51b), die breiter ist als Dichtung (50) im nicht zusammengepressten Zustand, aufgenommen wird.

30. Verfahren zur Herstellung einer Kontaktplatte für eine elektrochemische Zelle nach Anspruch 1, **dadurch gekennzeichnet dass** die Oberflächenschicht, in der die KunststoffKomponente des Verbundwerkstoffs angereichert ist, durch Behandlung mit einem Abrasiv, beispielsweise durch Sandstrahlen, abgetragen wird.

31. Verfahren zur Herstellung einer Kontaktplatte für elektrochemische Zellen bestehend aus
• einem leitfähigen Bereich (42) mit einer elektrischen Leitfähigkeit von mindestens 20 S/cm senkrecht zur Plattenebeneaus einem Verbundwerkstoff aus Polypropylen und synthetischem Graphit mit einem Massenanteil an Graphit von mindestens 80%,
• und einem an den leitfähigen Bereich anschließenden nicht leitfähigem Randbereich (43),
wobei mindestens eines der Funktionselemente
• Durchbrüche (24) für die Zuführwege (8, 10) und die Abfuhrwege (9, 11) der an den Elektroden (2, 3) der elektrochemischen Zelle (1) reagierenden Medien,
• Verbindungen (14, 15) der Medienverteilstruktur (12, 13) auf der Plattenoberfläche mit dem Zuführweg (8, 10) und dem Abfuhrweg (9, 11) eines an der an die Kontaktplatte angrenzenden Elektrode (2, 3) reagierenden Mediums,
• Dichtungsnuten (27, 48a, 51a, 51b),
• eine Dichtungsfunktion erfüllende Elemente (46, 47)
in den nicht leitfähigen Randbereich (43) integriert ist
**dadurch gekennzeichnet, dass**
die Kontaktplatte aus dem leitfähigen Bereich (42) und dem nicht leitfähigen Randbereich (43) in einem Werkzeug im Spritzgussverfahren mittels Mehrkomponenten-Technik hergestellt wird.

32. Verfahren zur Herstellung einer Kontaktplatte nach Anspruch 31, **dadurch gekennzeichnet, dass** der Randbereich (43) aus nicht leitfähigem Material als den leitfähigen Bereich (42) vollständig umschließender Rahmen ausgebildet wird, wobei die Breite (b) des Rahmens an den verschiedenen Seiten gleich ausgebildet ist.

33. Verfahren zur Herstellung einer Kontaktplatte nach Anspruch 31, **dadurch gekennzeichnet, dass** der Randbereich (43) aus nicht leitfähigem Material als den leitfähigen Bereich (42) vollständig umschließender Rahmen ausgebildet wird, wobei die Breite (b) des Rahmens an den verschiedenen Seiten verschieden ausgebildet wird.

34. Verfahren zur Herstellung einer Kontaktplatte nach Anspruch 31, **dadurch gekennzeichnet, dass** der Randbereich (43) aus einem nicht leitfähigen Material so ausgebildet wird, dass er den leitfähigen Bereich (42) nicht vollständig umschließt.

35. Verfahren zur Herstellung einer Kontaktplatte nach Anspruch 31, **dadurch gekennzeichnet, dass** zwischen den Werkstoffen der Bereiche (42) und (43) eine stoffschlüssige Verbindung gebildet wird.

36. Verfahren zur Herstellung einer Kontaktplatte nach Anspruch 31, **dadurch gekennzeichnet, dass** zwischen den Bereichen (42) und (43) Verzahnungen, Verkeilungen oder ineinandergreifende Strukturen (44, 45) gebildet werden.

37. Verfahren nach Anspruch 36, wobei der leitfähige Bereich (42) so ausgebildet wird, dass er einen in den nicht leitfähigen Bereich (43) herein ragenden Vorsprung (44) aufweist, der eine durchgehende Bohrung (45) enthält, die beim Spritzgießen des angrenzenden nicht leitfähigen Bereiches (43) mit dem nichtleitfähigen graphitfreien Kunststoff gefüllt wird, so dass beide Werkstoffe unauflöslich ineinander greifen.

38. Verfahren zur Herstellung einer Kontaktplatte nach Anspruch 31, **dadurch gekennzeichnet, dass** ein Rahmen (43), der soweit über die Plattenoberfläche übersteht, dass er im zusamnumgepressten Zustand im Zusammenwirken mit dem ebenso ausgebildeten Rahmen der folgenden Kontaktplatte die Membran-Elektroden-Einheit vollständig umschließt, aus einem Elastomer spritzgegossen wird.

39. Verfahren nach Anspruch 38, **dadurch gekennzeichnet, dass** der Rahmen (43) auf einer Oberfläche mit einem umlaufenden Feder (46) und auf der rückwärtigen Oberfläche mit einer umlaufenden Nut (47) versehen wird, so dass beim Zusammenpressen mehrerer Zellen in einem Zellenstapel die Federn (46) und Nuten (47) der aufeinanderfolgenden Rahmen (43) als Nut-Feder-Verbindung ineinander greifen können.

40. Verfahren zur Herstellung einer Kontaktplatte nach Anspruch 31, **dadurch gekennzeichnet dass** von der Oberfläche des leitfähigen Bereichs (42) eine maximal 30 um dicke Schicht durch Behandlung mit einem Abrasiv abgetragen wird.

41. Verfahren zur Herstellung einer Kontaktplatte nach Anspruch 31, **dadurch gekennzeichnet, dass** in der Oberfläche des als Rahmen ausgebildeten nicht leitfähigen Bereichs (43) Dichtungsnute (27, 48a, 51b) gebildet werden, und im Spritzguss ein Dichtungsmaterial aufgetragen wird, das von den Dichtungsnuten aufgenommen wird.

42. Verfahren nach Anspruch 41, **dadurch gekennzeichnet, dass** die Dichtungsnuten (48a, 51b) breiter ausgebildet werden als die von ihnen aufzunehmenden Dichtungen (48, 50) im nicht zusammengepressten Zustand.

43. Verfahren nach Anspruch 41, **dadurch gekennzeichnet**, die Dichtungsnut (51a) beim Aufbringen der Dichtung (50) in der Breite komplett mit dem Dichtungsmaterial gefüllt wird und die Dichtung (50) soweit über die Plattenoberfläche übersteht, dass beim Verbinden der Platten (7a) und (7b) die überstehenden Bereiche der Dichtung (50) von der kooperierenden Dichtungsnut (51b), die breiter ist als Dichtung 50 im nicht zusammengepressten Zustand, aufgenommen wird.

## Claims

1. A method for the production of a contact plate for an electrochemical cell (1) with an electrical conductivity perpendicular to the plate plane of at least 20 S/cm made from a composite material of polypropylene and synthetic graphite with a mass proportion of graphite of at least 80%,
wherein the contact plate contains the following function elements:
- openings (24) for the supply paths (8, 10) and discharge paths (9, 11) of the media reacting at the electrodes (2, 3) of the electrochemical cell (1),
- on at least one plate surface, recessed into the surface, a media distribution structure (12, 13) with flow paths (17) for distribution of the medium reacting at the adjacent electrode (2, 3) and a contact structure protruding from this media distribution structure with contact structure elements (16) for creating electrical contact with an electrode (2, 3) adjacent to the contact plate,
- connections (14, 15) of the media distribution structure (12, 13) on the plate surface with the supply path (8, 10) and discharge path (9, 11) of a medium reacting at the adjacent electrode (2, 3),
by injection-moulding in an injection-moulding tool, in the cavity of which
- all transitions (18) from the base surfaces (19) to the wall surfaces (20) of the flow paths (17) in the media distribution structure (12, 13), and
- all transitions (21) from the wall surfaces (20) of the flow paths (17) in the media distribution structure (12, 13) to the surfaces (22) of the contact structure elements (16) in contact with the adjacent electrode (2, 3) are rounded.

2. A method for the production of a contact plate according to claim 1, **characterised in that** the radius of rounding at the transition (18) from the base surface (19) to the wall surface (20) of a flow path (17) amounts to at least one-tenth and at most half the width of the flow path (17).

3. A method for the production of a contact plate according to claim 1, **characterised in that** the radius of rounding at the transition (21) from the wall surface (20) of the flow path (17) to the contact surface (22) of the contact structure element (16) is at least 0.1 mm and at most 0.5 mm.

4. A method for the production of a contact plate according to claim 1, **characterised in that** the protruding contact structures (16) with the rounded transitions (21) from the contact surfaces (22) of the contact structure elements (16) to the wall surfaces (20) of the flow paths (17) are designed to be higher by at least the rounding radius than required for fitting in the cell stack and then are worn away by at least the rounding radius so that a loss of contact surface (22) due to rounding is avoided.

5. A method for the production of a contact plate according to claim 1, **characterised in that** the tool is designed so that all direction changes of the flow paths (17) in the media distribution structure (12, 13) are rounded.

6. A method for the production of a contact plate according to claim 1, **characterised in that** during the injection-moulding process the openings (24) are bridged by flow webs.

7. Method according to claim 6, **characterised in that** the flow webs are removed in the filled injection-moulding tool by injection-stamping or core-pulling.

8. A method for the production of a contact plate according to claim 1, **characterised in that** the openings (24) in the filled injection-moulding tool are produced by injection-stamping or core-pulling.

9. A method for the production of a contact plate according to claim 1, **characterised in that** the tool is designed so that supporting webs (26) are formed which bridge the openings (24) in the contact plate.

10. Method according to claim 9, **characterised in that** the thickness of the supporting web (26) is at least 0.8 mm and the cross-section of the supporting web (26) is rounded.

11. A method for the production of a contact plate according to claim 1, **characterised in that** during injection-moulding the gate is formed as a sprue (28) with film gate (29).

12. Method according to claim 11, **characterised in that** the thickness of the film gate (29) is at least 0.3 mm and at most the thickness of the contact plate and the width of the film gate (29) is at least 5 mm and at most the width of the contact plate.

13. A method for the production of a contact plate according to claim 1, **characterised in that** casting is performed via hot channel nozzles with needle closures.

14. Method according to claim 13, **characterised in that** the gate diameter of a hot channel nozzle is at least 5 mm.

15. Method according to claim 13, **characterised in that** casting is performed via injection nozzles which can be controlled in cascade.

16. A method for the production of a contact plate according to claim 13, **characterised in that** in the tool the opening of at least one gate channel lies lower than the surface of the contact plate to be formed in the tool.

17. A method for the production of a contact plate according to claim 1, **characterised in that** casting is performed via at least one auxiliary surface (32) in the form of an shelf (31) provided at the plate edge, on which the gate channels are positioned, and this auxiliary surface is subsequently removed.

18. A method for the production of a contact plate according to claim 1, **characterised in that** the tool is designed so that all surfaces (20, 33, 34, 35) running transverse to the plate plane have a slope to the plate surface of 0.5 to 30° relative to the vertical.

19. A method for the production of a contact plate according to claim 1, **characterised in that** removal from the tool takes place by means of ejector pins (37) impacting on the base of the sealing grooves (27).

20. Method for the production of a contact plate according to claim 1, **characterised in that** removal from the tool takes place by means of rectangular ejectors (38) reaching behind the contact plate, having recesses projecting, on the end face (33) of the contact plate, beyond the separating plane of the two tool halves.

21. Method for the production of a contact plate according to claim 1, **characterised in that** removal from the tool takes place by means of compressed air ejectors wherein the openings of the compressed air channels (40) lie on the base surfaces (19) of the flow paths (17) of the media distribution structure (12, 13).

22. A method for the production of a contact plate according to claim 1, wherein only one surface of the contact plate is fitted with a media distribution structure.

23. A method for the production of a contact plate according to claim 1, wherein both surfaces of the contact plate are fitted with a media distribution structure.

24. A method for the production of a contact plate according to claim 23, wherein the tool has dimensions so that the thickness of the contact plate between the base surfaces (19) of the flow paths (17) of the media distribution structure on the first surface of the contact plate and the base surfaces (19) of the flow paths (17) of the media distribution structure on the opposite surface of the contact plate is at least 0.8 mm.

25. A method for the production of a contact plate according to claim 1, **characterised in that** on the plate surface fitted with media distribution structure (12, 13) is provided a recess (36) for embedding of an electrode (2, 3).

26. A method for the production of a contact plate according to claim 1, **characterised in that** grooves (27; 48a; 51a, 51b) are provided on at least one of the plate surfaces to hold seals.

27. A method for the production of a contact plate according to claim 1, **characterised in that** grooves (27; 48a; 51a, 51b) are provided on at least one of the plate surfaces to hold seals and a sealing material is applied that is held by the sealing grooves, wherein contact plate and seal are produced in one tool in two-component technology in injection-moulding.

28. Method according to claim 27, **characterised in that** the sealing grooves (48a, 51b) are formed wider than the seals (48, 50) that they hold, in their non-compressed state.

29. Method according to claim 27, **characterised in that** the sealing groove (51a) on application of the seal (50) is completely filled with sealing material over its width and that the seal (50) projects so far over the plate surface that on joining the plates (7a) and (7b) the protruding areas of the seal (50) are held by the co-operating sealing groove (51b) that is wider than the seal (50) in the non-compressed state.

30. A method for the production of a contact plate for an electrochemical cell according to claim 1, **characterised in that** the surface layer in which the plastic component of the composite material is enriched, is removed by treatment with an abrasive, for example by sand-blasting.

31. A method for the production of a contact plate for electrochemical cells comprising
- a conductive area (42) with an electrical conductivity of at least 20 S/cm perpendicular to the plate plane, made of a composite material of polypropylene and synthetic graphite with a mass proportion of graphite of at least 80%,
- and a non-conductive edge area (43) adjacent to the conductive area,
wherein at least one of the function elements:
- openings (24) for the supply paths (8, 10) and discharge paths (9, 11) of the media reacting at the electrodes (2, 3) of the electrochemical cell (1),
- connections (14, 15) of the media distribution structure (12, 13) on the plate surface with the supply path (8, 10) and the discharge path (9, 11) of a medium reacting at the electrode (2, 3) adjacent to the contact plate,
- sealing grooves (27, 48a, 51a, 51b),
- an element (46, 47) fulfilling a sealing function,
is integrated in the non-conductive edge area (43), **characterised in that** the contact plate comprising the conductive area (42) and the non-conductive area (43) is produced in one tool in the injection-moulding process by means of multi-component technology.

32. A method for the production of a contact plate according to claim 31, **characterised in that** the edge area (43) of non-conductive material is designed as a frame fully surrounding the conductive area (42), wherein the width (b) of the frame is formed equal on the various sides.

33. A method for the production of a contact plate according to claim 31, **characterised in that** the edge area (43) of non-conductive material is formed as a frame completely surrounding the conductive area (42), wherein the width (b) of the frame is formed differently on the various sides.

34. A method for the production of a contact plate according to claim 31, **characterised in that** the edge area (43) of a non-conductive material is formed so that it does not completely surround the conductive area (42).

35. A method for the production of a contact plate according to claim 31, **characterised in that** between the materials of areas (42) and (43) is formed a continuous-material connection.

36. A method for the production of a contact plate according to claim 31, **characterised in that** between the areas (42) and (43) are formed toothed, keying or intermeshing structures (44, 45).

37. Method according to claim 36, wherein the conductive area (42) is formed so that it has a protrusion (44) projecting into the non-conductive area (43) and containing a through-bore (45) that, on injection-moulding of the adjacent non-conductive area (43), is filled with the non-conductive graphite-free plastic so that the two materials intermesh indissolubly.

38. A method for the production of a contact plate according to claim 31, **characterised in that** a frame (43) which protrudes so far over the plate surface that in the compressed state, in co-operation with the similarly shaped frame of the following contact plate, it surrounds the membrane electrode assembly completely, is injection-moulded from an elastomer.

39. Method according to claim 38, **characterised in that** the frame (43) on one surface has a peripheral tongue (46) and on the rear surface a peripheral groove (47) so that on compression of several cells into a cell stack the tongues (46) and grooves (47) of successive frames (43) can intermesh as a tongue and groove connection.

40. A method for the production of a contact plate according to claim 31, **characterised in that** a layer of at most 30 µm thick is removed from the surface of the conductive area (42) by treatment with an abrasive.

41. A method for the production of a contact plate according to claim 31, **characterised in that** in the surface of the non-conductive area (43) formed as a frame are formed sealing grooves (27, 48a, 51b) and a sealing material, applied by injection-moulding, is taken up by the sealing grooves.

42. Method according to claim 41, **characterised in that** the sealing grooves (48a, 51b) are formed wider than the seals (48, 50) that they hold, in their non-compressed state.

43. Method according to claim 41, **characterised in that** the sealing groove (51a) on application of the seal (50) is completely filled with sealing material over its width and that the seal (50) projects so far over the plate surface that on joining the plates (7a) and (7b) the protruding areas of the seal (50) are held by the co-operating sealing groove (51b) that is wider than the seal (50) in the non-compressed state.

## Revendications

1. Procédé de fabrication d'une plaque de contact pour une cellule électrochimique (1) présentant une conductibilité électrique perpendiculaire au plan de la plaque d'au moins 20 S/cm, et composée d'un matériau composite en polypropylène et en graphite synthétique ayant une teneur massique en graphite d'au moins 80 %,
la plaque de contact contenant les éléments fonctionnels suivants :
- des passages (24) pour les voies d'entrée (8, 10) et les voies de sortie (9, 11) des milieux réagissant au niveau des électrodes (2, 3) de la cellule électrochimique (1),
- sur au moins sur une surface de la plaque, une structure de répartition des milieux (12, 13) encastrée dans la surface et comportant des voies d'écoulement (17) pour répartir un milieu réagissant au niveau de l'électrode adjacente (2, 3) et une structure de contact dépassant de cette structure de répartition de milieux et présentant des éléments de structure de contact (16) pour obtenir un contact électrique avec une électrode adjacente (2, 3) sur la plaque de contact,
- des liaisons (14, 15) de la structure de répartition des milieux (12, 13) sur la surface de la plaque avec la voie d'entrée (8, 10) et la voie de sortie (9, 11) d'un milieu réagissant au niveau de l'électrode adjacente (2, 3),
au moyen d'un moulage par injection dans un outil de moulage par injection, dans la cavité duquel sont arrondies :
- toutes les jonctions (18) des surfaces du fond (19) par rapport aux surfaces des parois (20) des voies d'écoulement (17) dans la structure de répartition des milieux (12, 13), et
- toutes les jonctions (21) des surfaces des parois (20) des voies d'écoulement (17) dans la structure de répartition des milieux (12, 13) par rapport aux surfaces (22) des éléments de la structure de contact (16) qui sont en contact avec l'électrode adjacente (2, 3).

2. Procédé de fabrication d'une plaque de contact selon la revendication 1,
**caractérisé en ce que**
le rayon de l'arrondi au niveau de la jonction (18) de la surface du fond (19) par rapport à la surface des parois (20) d'une voie d'écoulement (17) représente au moins un dixième et au plus la moitié de la largeur de la voie d'écoulement (17).

3. Procédé de fabrication d'une plaque de contact selon la revendication 1,
**caractérisé en ce que**
le rayon de l'arrondi au niveau de la jonction (21) de la surface des parois (20) de la voie d'écoulement (17) par rapport à la surface de contact (22) de l'élément de la structure de contact (16) est au moins de 0,1 mm et au plus de 0,5 mm.

4. Procédé de fabrication d'une plaque de contact selon la revendication 1,
**caractérisé en ce que**
les structures de contact (16) en saillie avec les jonctions arrondies (21) partant des surfaces de contact (22) des éléments de la structure de contact (16) jusqu'aux surfaces des parois (20) de la voie d'écoulement (17) sont plus élevées, au moins du rayon de l'arrondi, que cela n'est nécessaire pour le montage dans la pile de cellules et sont ensuite rabaissées au moins du rayon de l'arrondi, de manière à éviter une perte de surface de contact (22) due à l'arrondi.

5. Procédé de fabrication d'une plaque de contact selon la revendication 1,
**caractérisé en ce que**
l'outil est configuré pour arrondir tous les changements de direction des voies d'écoulement (17) dans la structure de répartition des milieux (12, 13).

6. Procédé de fabrication d'une plaque de contact selon la revendication 1,
**caractérisé en ce que**
les passages (24) sont recouverts de barrettes d'écoulement pendant le processus de moulage par injection.

7. Procédé selon la revendication 6,
**caractérisé en ce que**
les barrettes d'écoulement sont enlevées, dans l'outil de moulage par injection rempli, au moyen d'un estampage par injection ou d'une technique de traction du noyau.

8. Procédé de fabrication d'une plaque de contact selon la revendication 1,
**caractérisé en ce que**
les passages (24) sont formés, dans l'outil de moulage par injection rempli, au moyen d'un estampage par injection ou d'une technique de traction du noyau.

9. Procédé de fabrication d'une plaque de contact selon la revendication 1,
**caractérisé en ce que**
l'outil est configuré de manière à former des barrettes d'appui (26) qui forment un pont sur les passages (24) dans la plaque de contact.

10. Procédé selon la revendication 9,
**caractérisé en ce que**
l'épaisseur de la barrette d'appui (26) est d'au moins 0,8 mm et la section de la barrette d'appui (26) est arrondie.

11. Procédé de fabrication d'une plaque de contact selon la revendication 1,
**caractérisé en ce que**
le moulage servant de moulage de barrette (28) est effectué par une entame de film (29) au cours du moulage par injection.

12. Procédé selon la revendication 11,
**caractérisé en ce que**
l'épaisseur de l'entame de film (29) est d'au moins 0,3 mm et au plus de l'épaisseur de la plaque de contact, et la largeur de l'entame de film (29) est d'au moins 5 mm et au plus de la largeur de la plaque de contact.

13. Procédé de fabrication d'une plaque de contact selon la revendication 1,
**caractérisé en ce que**
le moulage s'effectue par des buses à canal chauffé avec des obturateurs à aiguilles.

14. Procédé selon la revendication 13,
**caractérisé en ce que**
le diamètre de l'entame d'une buse à canal chauffé est d'au moins 5 mm.

15. Procédé selon la revendication 13,
**caractérisé en ce que**
le moulage s'effectue par des buses d'injection pouvant être commandées en cascade.

16. Procédé de fabrication d'une plaque de contact selon la revendication 13,
**caractérisé en ce que**
l'embouchure d'au moins un canal de moulage est plus profonde dans l'outil que la surface de la plaque de contact à former dans l'outil.

17. Procédé de fabrication d'une plaque de contact selon la revendication 1,
**caractérisé en ce que**
le moulage s'effectue à l'aide d'au moins une surface auxiliaire (32) sous la forme d'une extension (31) sur le bord de la plaque sur laquelle sont positionnés les canaux de moulage, et cette surface auxiliaire est ensuite enlevée.

18. Procédé de fabrication d'une plaque de contact selon la revendication 1,
**caractérisé en ce que**
l'outil est configuré de manière à ce que toutes les surfaces (20, 33, 34, 35) transversales au plan de la plaque présentent une inclinaison de 0,5 à 30° par rapport aux perpendiculaires de la surface de la plaque.

19. Procédé de fabrication d'une plaque de contact selon la revendication 1,
**caractérisé en ce que**
l'enlèvement s'effectue au moyen de tiges d'éjection (37) s'engageant sur le fond des rainures d'étanchéité (27).

20. Procédé de fabrication d'une plaque de contact selon la revendication 1,
**caractérisé en ce que**
l'enlèvement s'effectue au moyen d'éjecteurs rectangles (38) plaqués à l'arrière de la plaque de contact et munis de creux dépassant de la surface frontale (33) de la plaque de contact sur le plan de séparation des deux moitiés de l'outil.

21. Procédé de fabrication d'une plaque de contact selon la revendication 1,
**caractérisé en ce que**
l'enlèvement s'effectue au moyen d'un éjecteur à air comprimé, les embouchures des canaux d'air comprimé (40) étant situées sur les surfaces de fond (19) des voies d'écoulement (17) de la structure de répartition des milieux (12, 13).

22. Procédé de fabrication d'une plaque de contact selon la revendication 1,
dans lequel
une seule surface de la plaque de contact est munie d'une structure de répartition des milieux.

23. Procédé de fabrication d'une plaque de contact selon la revendication 1,
dans lequel
les deux surfaces de la plaque de contact sont munies d'une structure de répartition des milieux.

24. Procédé de fabrication d'une plaque de contact selon la revendication 23,
dans lequel
l'outil est dimensionné pour que l'épaisseur de la plaque de contact entre les surfaces de fond (19) des voies d'écoulement (17) de la structure de répartition des milieux sur la première surface de la plaque de contact et les surfaces de fond (19) des voies d'écoulement (17) de la structure de répartition des milieux sur la surface opposée de la plaque de contact soit au moins de 0,8 mm.

25. Procédé de fabrication d'une plaque de contact selon la revendication 1,
**caractérisé en ce que**
un évidement (36) est formé sur la surface de la plaque munie de la structure de répartition des milieux (12, 13) pour l'intégration d'une électrode (2, 3).

26. Procédé de fabrication d'une plaque de contact selon la revendication 1,
**caractérisé en ce que**
des rainures (27 ; 48a, 51a, 51b) destinées à recevoir des joints d'étanchéité sont formées sur au moins une des surfaces de la plaque.

27. Procédé de fabrication d'une plaque de contact selon la revendication 1,
**caractérisé en ce que**
des rainures (27 ; 48a, 51a, 51b) destinées à recevoir des joints d'étanchéité sont formées sur au moins une des surfaces de la plaque et un matériau d'étanchéité est appliqué dans les rainures d'étanchéité, la plaque de contact et le joint d'étanchéité étant réalisés par moulage par injection dans un outil selon une technique à deux composants.

28. Procédé selon la revendication 27,
**caractérisé en ce que**
les rainures d'étanchéité (48a, 51b) sont plus larges que les joints d'étanchéité (48, 50) qu'elles doivent recevoir à l'état non comprimé.

29. Procédé selon la revendication 27,
**caractérisé en ce que**
la rainure d'étanchéité (51a) est complètement remplie, sur la largeur, du matériau d'étanchéité lors de l'application du joint d'étanchéité (50) et le joint d'étanchéité (50) dépasse de la surface de la plaque de sorte que, lors de la liaison des plaques (7a) et (7b), les zones du joint d'étanchéité (50) qui dépassent sont reçues par la rainure d'étanchéité (51b) coopérante plus large que le joint d'étanchéité (50) à l'état non comprimé.

30. Procédé de fabrication d'une plaque de contact pour une cellule électrochimique selon la revendication 1,
**caractérisé en ce que**
la couche de surface, dans laquelle le composant en matière plastique du matériau composite est déposé, est enlevée par un traitement utilisant un abrasif, par exemple par jet de sable.

31. Procédé de fabrication d'une plaque de contact pour une cellule électrochimique comprenant :
- une zone conductrice (42) qui présente une conductibilité électrique d'au moins 20 S/cm perpendiculairement au plan de la plaque et est composée d'un matériau composite en polypropylène et en graphite synthétique ayant une teneur massique en graphite d'au moins 80%,
- et une zone de bord (43) non conductrice et raccordée à la zone conductrice,
avec au moins l'un des éléments fonctionnels suivants intégré dans la zone de bord (43) non conductrice :
- des passages (24) pour les voies d'entrée (8, 10) et les voies de sortie (9, 11) des milieux réagissant au niveau des électrodes (2, 3) de la cellule électrochimique (1),
- des liaisons (14, 15) de la structure de répartition des milieux (12, 13) sur la surface de la plaque avec la voie d'entrée (8, 10) et la voie de sortie (9, 11) d'un milieu réagissant au niveau de l'électrode adjacente (2, 3) à la plaque de contact,
- des rainures d'étanchéité (27, 48a, 51a, 51b),
- des éléments (46, 47) ayant une fonction d'étanchéité,
**caractérisé en ce que**
la plaque de contact est composée de la zone conductrice (42) et de la zone de bord non conductrice (43) dans un outil au moyen d'un procédé de moulage par injection utilisant une technique à plusieurs composants.

32. Procédé de fabrication d'une plaque de contact selon la revendication 31,
**caractérisé en ce que**
la zone de bord (43) composée d'un matériau non conducteur est conçue comme la zone conductrice (42) du cadre l'entourant entièrement, la largeur (b) du cadre étant identique sur les différents côtés.

33. Procédé de fabrication d'une plaque de contact selon la revendication 31,
**caractérisé en ce que**
la zone de bord (43) composée d'un matériau non conducteur est conçue comme la zone conductrice (42) du cadre l'entourant entièrement, la largeur (b) du cadre étant différente sur les différents côtés.

34. Procédé de fabrication d'une plaque de contact selon la revendication 31,
**caractérisé en ce que**
la zone de bord (43) composée d'un matériau non conducteur est conçue de manière à ne pas entourer entièrement la zone conductrice (42).

35. Procédé de fabrication d'une plaque de contact selon la revendication 31,
**caractérisé en ce qu'**
une liaison est formée par complémentarité de matière entre les matériaux des zones (42) et (43).

36. Procédé de fabrication d'une plaque de contact selon la revendication 31,
**caractérisé en ce que**
des dentures, des calages ou des structures s'engageant les unes dans les autres (44, 45) sont formées entre les zones (42) et (43).

37. Procédé selon la revendication 36,
dans lequel
la zone conductrice (42) est conçue de manière à présenter une saillie (44) dépassant dans la zone non conductrice (43) et contenant un alésage traversant (45) rempli de matière plastique non conductrice et exempte de graphite au cours du moulage par injection de la zone adjacente non conductrice (43), de manière à ce que les deux matériaux s'engagent l'un dans l'autre de manière indissoluble.

38. Procédé de fabrication d'une plaque de contact selon la revendication 31,
**caractérisé en ce qu'**
un cadre (43) dépassant de la surface de la plaque de manière à entourer entièrement l'unité membrane-électrode à l'état comprimé, en coopération avec le cadre de la plaque de contact suivante formé de la même manière est moulé par injection à partir d'un élastomère.

39. Procédé selon la revendication 38,
**caractérisé en ce que**
le cadre (43) est muni, sur une surface, d'un ressort circonférentiel (46) et, sur la surface arrière, d'une rainure circonférentielle (47), de sorte qu'au moment de la compression de plusieurs cellules dans une pile de cellules, les ressorts (46) et les rainures (47) des cadres successifs (43) puissent s'engager sous la forme d'un assemblage rainure-ressort.

40. Procédé de fabrication d'une plaque de contact selon la revendication 31,
**caractérisé en ce qu'**
on enlève une couche d'épaisseur maximale de 30 µm de la surface de la zone conductrice (42) par un traitement avec un abrasif.

41. Procédé de fabrication d'une plaque de contact selon la revendication 31,
**caractérisé en ce qu'**
on forme des rainures d'étanchéité (27, 48a, 51b) dans la surface de la zone non conductrice conçue sous forme de cadre (43), et au cours du moulage par injection on applique un matériau d'étanchéité dans les rainures d'étanchéité.

42. Procédé selon la revendication 41,
**caractérisé en ce que**
les rainures d'étanchéité (48a, 51b) sont plus larges que les joints d'étanchéité (48, 50) reçus dans celles-ci à l'état non comprimé.

43. Procédé selon la revendication 41,
**caractérisé en ce que**
la rainure d'étanchéité (51a) est complètement remplie, sur la largeur, du matériau d'étanchéité lors de l'application du joint d'étanchéité (50) et le joint d'étanchéité (50) dépasse de la surface de la plaque de sorte que, lors de la liaison des plaques (7a) et (7b), les zones du joint d'étanchéité (50) qui dépassent sont reçues par la rainure d'étanchéité (51b) coopérante plus large que le joint d'étanchéité (50) à l'état non comprimé.
